# EUROPEAN PATENT APPLICATION

(11) **EP 3 002 988 A1**
(43) Date of publication of application: **06.04.2016**
(21) Application number: 13887215.5
(22) Date of filing: 21.06.2013
(51) Int. Cl.: H04W 76/02

(54) **METHOD AND DEVICE FOR ESTABLISHING RRC CONNECTION**

(71) Applicant: Huawei Technologies Co., Ltd., Longgang District Shenzhen, Guangdong 518129 (CN)
(72) Inventor: MIAO, Jinhua, Shenzhen Guangdong 518129 (CN); QUAN, Wei, Shenzhen Guangdong 518129 (CN); WANG, Yu, Shenzhen Guangdong 518129 (CN); LIN, Bo, Shenzhen Guangdong 518129 (CN)
(74) Representative: Körber, Martin Hans
(86) International application number: PCT/CN2013/077685
(87) International publication number: WO 2014/201697

(57) **Abstract**

The present invention relates to the field of communications, and discloses a method and an apparatus for establishing an RRC connection, which are used to resolve a problem that utilization of physical layer resources is relatively low in a process of establishing an RRC connection. The method provided in the present invention includes: determining, by a base station, that user equipment UE needs to switch from an RRC connected mode to an RRC idle mode, and determining that a simplified RRC process is used when the UE establishes a next RRC connection, where the simplified RRC process refers to establishing an RRC connection by using acquired RRC configuration information of the UE; and when the UE requests to establish a next RRC connection, establishing an RRC connection for the UE by using the simplified RRC process. The present invention is applicable to the field of communications, and is used to establish an RRC connection.

## Description

### TECHNICAL FIELD

The present invention relates to the field of communications, and in particular, to a method and an apparatus for establishing an RRC (Radio Resource Control, radio resource control) connection.

### BACKGROUND

In an LTE (Long Term Evolution, Long Term Evolution) Rel-11 system, when a UE (user equipment, user equipment) enters a connected mode from an IDLE mode, an idle mode, an RRC connection needs to be established. In a scheduling process, due to different time sequence relationships, RRC signaling in the process of establishing an RRC connection cannot be transmitted in a same scheduling timeslot, and more scheduling timeslots need to be occupied. For example, a security mode command (SecurityModeCommand) and an RRC connection reconfiguration (RRCConnectionReconfiguration) message need to be sent in two different scheduling timeslots to the UE. Moreover, after receiving the security mode command and the RRC connection reconfiguration message, the UE needs to return an acknowledgment message to a base station, where the acknowledgment message alone also needs to occupy one scheduling timeslot. For example, when receiving security mode signaling, the UE needs to return a security mode complete (Security ModeComplete) message to the base station; when receiving the RRC connection reconfiguration message, the UE needs to return an RRC connection reconfiguration complete (RRCConnectionReconfigurationComplete) message to the base station.

In the process of establishing an RRC connection, during physical layer scheduling, due to different time sequence relationships, each piece of RRC signaling needs to occupy one independent physical layer scheduling resource; additionally, after receiving the RRC signaling, the UE needs to return an acknowledgment message that also needs to occupy an independent physical layer scheduling resource granularity. As a result, a large quantity of physical layer scheduling resource granularities need to be occupied in the process of establishing an RRC connection, and utilization of physical layer resources is relatively low.

### SUMMARY

Embodiments of the present invention provide a method and an apparatus for establishing an RRC connection, which can resolve a problem that a relatively large quantity of physical layer scheduling resources are occupied and utilization of physical layer resources is relatively low in a process of establishing an RRC connection.

To achieve the foregoing objective, the following technical solutions are used in the embodiments of the present invention:
According to a first aspect, an embodiment of the present invention provides a method for establishing a radio resource control RRC connection, where the method includes:
   determining, by a base station, that user equipment UE needs to switch from an RRC connected mode to an RRC idle mode, and determining that a simplified RRC process is used when the UE establishes a next RRC connection, where the simplified RRC process refers to establishing an RRC connection by using acquired RRC configuration information of the UE; and
   when the UE requests to establish a next RRC connection, establishing an RRC connection for the UE by using the simplified RRC process.

In a first possible implementation manner, the determining, by a base station, that a simplified RRC process is used when the UE establishes a next RRC connection includes:
determining that a bearer type of the UE remains unchanged in a set period of time, to determine that the simplified RRC process is used when the UE establishes a next RRC connection;
   or
determining that a time when the UE camps on a current cell is longer than a set period of time, to determine that the simplified RRC process is used when the UE establishes a next RRC connection;
   or
determining that a moving speed of the UE is less than or equal to a set value, to determine that the simplified RRC process is used when the UE establishes a next RRC connection;
   or
determining that load of a cell in which the UE is located is less than a set value, to determine that the simplified RRC process is used when the UE establishes a next RRC connection.

With reference to the first aspect or the first possible implementation manner of the first aspect, in a second possible implementation manner, before the establishing an RRC connection for the UE by using the simplified RRC process, the method further includes:
sending an RRC connection release message to the UE, where the RRC connection release message carries a first indication message, and the first indication message is used to instruct the UE to store RRC configuration information used for establishing a current RRC connection; and
the establishing an RRC connection for the UE by using the simplified RRC process includes:
   acquiring RRC configuration information of the UE; and
   establishing, in response to a received RRC connection request message sent by the UE, an RRC connection for the UE according to the RRC configuration information of the UE, and sending a first RRC connection setup message to the UE, where the first RRC connection setup message is used to instruct the UE to establish an RRC connection by using the stored RRC configuration information.

With reference to the second possible implementation manner of the first aspect, in a third possible implementation manner, the acquiring RRC configuration information of the UE includes:
determining that the simplified RRC process is used when the UE establishes a next RRC connection, storing a context context of the UE, and acquiring the RRC configuration information of the UE from the context of the UE; or
determining that the simplified RRC process is used when the UE establishes a next RRC connection, and storing an RRC configuration parameter of the UE and an identifier of the UE that are used when the UE establishes a previous RRC connection, where the RRC configuration parameter of the UE and the identifier of the UE are the RRC configuration information of the UE.

With reference to the third possible implementation manner of the first aspect, in a fourth possible implementation manner, the method further includes:
starting a first timer; and
when it is determined that the first timer times out, deleting the stored context context of the UE; or
when it is determined that the first timer times out, deleting the stored RRC configuration parameter of the UE and the stored identifier of the UE.

With reference to the second possible implementation manner, the third possible implementation manner, or the fourth possible implementation manner of the first aspect, in a fifth possible implementation manner, the RRC connection request message sent by the UE includes a second indication message, where the second indication message is used to indicate whether the RRC configuration information is stored in the UE; and
the establishing, in response to a received RRC connection request message sent by the UE, an RRC connection for the UE according to the RRC configuration information of the UE, and sending a first RRC connection setup message to the UE includes:
receiving the RRC connection request message sent by the UE, acquiring the second indication message from the RRC connection request message, and determining, according to the second indication message, that the RRC configuration information is stored in the UE; and
establishing the RRC connection for the UE according to the RRC configuration information of the UE, and sending the first RRC connection setup message to the UE, to instruct the UE to establish an RRC connection according to the RRC configuration information stored by the UE.

With reference to the second possible implementation manner, the third possible implementation manner, or the fourth possible implementation manner of the first aspect, in a sixth possible implementation manner, the method further includes:
adding a non-contention dedicated preamble preamble to the RRC connection release message; and
the establishing, in response to a received RRC connection request message sent by the UE, an RRC connection for the UE according to the RRC configuration information of the UE, and sending a first RRC connection setup message to the UE includes:
   determining that a preamble sent by the UE is the non-contention dedicated preamble, to determine that the RRC configuration information is stored in the UE, establishing the RRC connection for the UE according to the RRC configuration information of the UE, and sending the first RRC connection setup message to the UE.

With reference to the fifth possible implementation manner or the sixth possible implementation manner of the first aspect, in a seventh possible implementation manner, the first RRC connection setup message carries an RRC connection reconfiguration message and an RRC security mode signaling message.

With reference to the first aspect or the first possible implementation manner of the first aspect, in an eighth possible implementation manner, the method further includes:
storing an RRC configuration index table, where the RRC configuration index table includes at least one RRC configuration scheme, determining an RRC configuration scheme of the UE from the stored RRC configuration index table according to the moving speed of the UE and/or a service requirement of the UE, and acquiring RRC configuration information of the UE according to the RRC configuration scheme of the UE.

With reference to the eighth possible implementation manner of the first aspect, in a ninth possible implementation manner, the establishing an RRC connection for the UE by using the simplified RRC process includes:
receiving an RRC connection request message sent by the UE, where the RRC connection request message sent by the UE includes first index information, and the first index information is corresponding to an RRC configuration scheme in the RRC configuration index table; and
determining, in the RRC configuration index table, the RRC configuration scheme corresponding to the first index information, acquiring the RRC configuration information of the UE according to the RRC configuration scheme corresponding to the first index information, establishing the RRC connection for the UE according to the RRC configuration information of the UE, and sending a first RRC connection setup message to the UE.

With reference to the ninth possible implementation manner of the first aspect, in a tenth possible implementation manner, the method further includes:
the RRC configuration index table is stored in the UE; and
the first RRC connection setup message includes second index information, the second index information is corresponding to an RRC configuration scheme in the RRC configuration index table stored by the UE, and the second index information is used to instruct the UE to determine, in the RRC configuration index table, the RRC configuration scheme corresponding to the second index information, acquire the RRC configuration information of the UE according to the RRC configuration scheme, and establish an RRC connection by using the RRC configuration information.

With reference to the first aspect or the first possible implementation manner of the first aspect, in an eleventh possible implementation manner, the method further includes:
receiving an RRC connection request message sent by the UE, where the RRC connection request message carries a non-access stratum NAS message, and the NAS message is used to request RRC configuration information of the UE from the core network device; and
sending the NAS message to the core network device, so that the core network device determines the RRC configuration information of the UE according to the NAS message, and returns the RRC configuration information of the UE to the base station, where
the establishing an RRC connection for the UE by using the simplified RRC process includes:
   sending a first RRC connection setup message to the UE, and establishing an RRC connection to the UE according to the RRC configuration information of the UE, where the first RRC connection setup message carries an RRC connection reconfiguration message and an RRC security mode signaling message.

According to a second aspect, an embodiment of the present invention provides a method for establishing a radio resource control RRC connection, where the method includes:
receiving, by user equipment UE, a first RRC connection setup message sent by a base station, where the first RRC connection setup message is used to instruct the UE to establish an RRC connection by using a simplified RRC process, where the simplified RRC process refers to establishing an RRC connection by using acquired RRC configuration information of the UE; and
establishing an RRC connection by using the simplified RRC process.

In a first possible implementation manner, before the establishing an RRC connection by using the simplified RRC process, the method further includes:
acquiring RRC configuration information of the UE.

With reference to the first possible implementation manner of the second aspect, in a second possible implementation manner, before the receiving, by user equipment UE, a first RRC connection setup message sent by a base station, the method further includes:
establishing, by the UE, an RRC connection to the base station;
determining, by the UE, that the UE needs to switch from an RRC connected mode to an RRC idle mode, and sending an RRC connection release request message to the base station; and
receiving an RRC connection release message that is sent by the base station according to the RRC connection release request message, and switching to the RRC idle mode according to the RRC connection release message, where the RRC connection release message carries a first indication message, and the first indication message is used to instruct the UE to store RRC configuration information used for establishing a current RRC connection.

With reference to the second possible implementation manner of the second aspect, in a third possible implementation manner, the acquiring RRC configuration information of the UE includes:
in response to the first indication message in the RRC connection release message, storing the RRC configuration information used for establishing the current RRC connection, where the RRC configuration information used for establishing the current RRC connection is the RRC configuration information of the UE.

With reference to the second possible implementation manner or the third possible implementation manner of the second aspect, in a fourth possible implementation manner, after the receiving an RRC connection release message that is sent by the base station according to the RRC connection release request message, and switching to the RRC idle mode according to the RRC connection release message, the method further includes:
determining, by the UE, that the UE needs to switch from the RRC idle mode to the RRC connected mode, and sending an RRC connection request message to the base station, where the RRC connection request message includes a second indication message, and the second indication message is used to indicate that the RRC configuration information is stored in the UE.

With reference to the second possible implementation manner or the third possible implementation manner of the second aspect, in a fifth possible implementation manner, the RRC connection release message carries a non-contention dedicated preamble preamble; and
before the determining, by the UE, that the UE needs to switch from the RRC idle mode to the RRC connected mode, and sending an RRC connection request message to the base station, the method further includes:
sending the non-contention dedicated preamble to the base station, so as to access the base station, where the non-contention dedicated preamble is used to indicate that the RRC configuration information is stored in the UE.

With reference to the fourth possible implementation manner or the fifth possible implementation manner of the second aspect, in a sixth possible implementation manner, the first RRC connection setup message is used to instruct the UE to establish an RRC connection according to the stored RRC configuration information; and
the establishing an RRC connection by using the simplified RRC process includes:
in response to the first RRC connection setup message, establishing an RRC connection according to the stored RRC configuration information.

With reference to the second possible implementation manner of the second aspect, the third possible implementation manner of the second aspect, the fourth possible implementation manner of the second aspect, the fifth possible implementation manner of the second aspect, or the sixth possible implementation manner of the second aspect, in a seventh possible implementation manner, the first RRC connection setup message carries an RRC connection reconfiguration message and an RRC security mode signaling message.

With reference to the first possible implementation manner of the second aspect, in an eighth possible implementation manner, the acquiring RRC configuration information of the UE further includes:
storing, by the UE, an RRC configuration index table, where the RRC configuration index table includes at least one RRC configuration scheme, determining an RRC configuration scheme of the UE from the stored RRC configuration index table according to a moving speed of the UE and/or a service requirement of the UE, and acquiring the RRC configuration information of the UE according to the RRC configuration scheme of the UE.

With reference to the eighth possible implementation manner of the second aspect, in a ninth possible implementation manner, before the receiving, by UE, a first RRC connection setup message sent by a base station, the method further includes:
detecting a current moving speed of the UE and/or a current service requirement of the UE, and determining first index information, where the first index information is corresponding to an RRC configuration scheme in the RRC configuration index table; and
sending an RRC connection request message to the base station, where the RRC connection request message includes the first index information, the first index information is used to instruct the base station to determine the RRC configuration information of the UE, and the RRC configuration index table is stored in the base station.

With reference to the eighth possible implementation manner or the ninth possible implementation manner of the second aspect, in a tenth possible implementation manner, the first RRC connection setup message includes second index information, the second index information is corresponding to an RRC configuration scheme in the RRC configuration index table, and the second index information is used to instruct the UE to determine an RRC configuration scheme in the RRC configuration index table and establish an RRC connection by using the determined RRC configuration scheme.

With reference to the tenth possible implementation manner of the second aspect, in an eleventh possible implementation manner, the acquiring RRC configuration information of the UE includes:
determining, in the configuration index table, the RRC configuration scheme corresponding to the second index information, and acquiring the RRC configuration information of the UE according to the RRC configuration scheme.

With reference to the eleventh possible implementation manner of the second aspect, in a twelfth possible implementation manner, the establishing an RRC connection by using the simplified RRC process includes:
establishing an RRC connection by using the acquired RRC configuration information of the UE.

With reference to the first possible implementation manner of the second aspect, in a thirteenth possible implementation manner, before the receiving, by user equipment UE, a first RRC connection setup message sent by a base station, the method further includes:
sending an RRC connection request message to the base station, where the RRC connection request information carries a non-access stratum NAS message, and the NAS message needs to be reported by the base station to a core network device, so that the core network device determines the RRC configuration information of the UE, and returns the RRC configuration information of the UE to the base station.

With reference to the thirteenth possible implementation manner of the second aspect, in a fourteenth possible implementation manner, the acquiring RRC configuration information of the UE includes:
receiving the RRC configuration information of the UE that is determined by the core network device and forwarded by the base station; and
the establishing an RRC connection by using the simplified RRC process includes:
   establishing an RRC connection according to the RRC configuration information of the UE;
   where the first RRC connection setup message carries an RRC connection reconfiguration message and an RRC security mode signaling message.

According to a third aspect, an embodiment of the present invention provides an apparatus for establishing a radio resource control RRC connection, where the apparatus includes:
a determining module, configured to determine that user equipment UE needs to switch from an RRC connected mode to an RRC idle mode, and determine that a simplified RRC process is used when the UE establishes a next RRC connection, where the simplified RRC process refers to establishing an RRC connection by using acquired RRC configuration information of the UE; and
a processing module, configured to: when the UE requests to establish a next RRC connection, establish an RRC connection for the UE by using the simplified RRC process.

In a first possible implementation manner, the determining module is specifically configured to determine that a bearer type of the UE remains unchanged in a set period of time, to determine that the simplified RRC process is used when the UE establishes a next RRC connection;
or
the determining module is specifically configured to determine that a time when the UE camps on a current cell is longer than a set period of time, to determine that the simplified RRC process is used when the UE establishes a next RRC connection;
or
the determining module is specifically configured to determine that a moving speed of the UE is less than or equal to a set value, to determine that the simplified RRC process is used when the UE establishes a next RRC connection;
or
the determining module is specifically configured to determine that load of a cell in which the UE is located is less than a set value, to determine that the simplified RRC process is used when the UE establishes a next RRC connection.

With reference to the third aspect or the first possible implementation manner of the third aspect, in a second possible implementation manner, the apparatus further includes:
a sending module, configured to send an RRC connection release message to the UE, where the RRC connection release message carries a first indication message, and the first indication message is used to instruct the UE to store RRC configuration information used for establishing a current RRC connection, where
the processing module is specifically configured to acquire RRC configuration information of the UE, establish, in response to a received RRC connection request message sent by the UE, an RRC connection for the UE according to the RRC configuration information of the UE, and send a first RRC connection setup message to the UE, where the first RRC connection setup message is used to instruct the UE to establish an RRC connection by using the stored RRC configuration information.

With reference to the second possible implementation manner of the third aspect, in a third possible implementation manner, the processing module is configured to store a context context of the UE, and acquire the RRC configuration information of the UE from the context of the UE;
or
the processing module is configured to store an RRC configuration parameter of the UE and an identifier of the UE that are used when the UE establishes a previous RRC connection, where the RRC configuration parameter of the UE and the identifier of the UE are the RRC configuration information of the UE.

With reference to the third possible implementation manner of the third aspect, in a fourth possible implementation manner, the apparatus further includes:
a first timer, configured to start timing when it is determined that the UE switches to the RRC idle mode, where
the processing module is configured to: when it is determined that the first timer times out, delete the stored context context of the UE; or
the processing module is further configured to: when it is determined that the first timer times out, delete the stored RRC configuration parameter of the UE and the stored identifier of the UE.

With reference to the second possible implementation manner, the third possible implementation manner, or the fourth possible implementation manner of the third aspect, in a fifth possible implementation manner, the processing module is configured to receive the RRC connection request message sent by the UE, where the RRC connection request message includes a second indication message, the second indication message is used to indicate whether the RRC configuration information is stored in the UE; acquire the second indication message from the RRC connection request message, and determine, according to the second indication message, that the RRC configuration information is stored in the UE; and establish an RRC connection for the UE according to the RRC configuration information of the UE, and send the first RRC connection setup message to the UE, to instruct the UE to establish an RRC connection according to the RRC configuration information stored by the UE.

With reference to the second possible implementation manner, the third possible implementation manner, or the fourth possible implementation manner of the third aspect, in a sixth possible implementation manner, the sending module is further configured to add a non-contention dedicated preamble preamble to the RRC connection release message; and
the processing module is configured to determine that a preamble sent by the UE is the non-contention dedicated preamble, to determine that the RRC configuration information is stored in the UE, establish an RRC connection for the UE according to the RRC configuration information of the UE, and send the first RRC connection setup message to the UE.

With reference to the fifth possible implementation manner or the sixth possible implementation manner of the third aspect, in a seventh possible implementation manner, the first RRC connection setup message sent by the processing module carries an RRC connection reconfiguration message and an RRC security mode signaling message.

With reference to the third aspect or the first possible implementation manner of the third aspect, in an eighth possible implementation manner, the apparatus further includes:
a storage module, configured to store an RRC configuration index table, where the RRC configuration index table includes at least one RRC configuration scheme, determine an RRC configuration scheme of the UE from the stored RRC configuration index table according to the moving speed of the UE and/or a service requirement of the UE, and acquire RRC configuration information of the UE according to the RRC configuration scheme of the UE.

With reference to the eighth possible implementation manner of the third aspect, in a ninth possible implementation manner, the processing module is specifically configured to receive an RRC connection request message sent by the UE, where the RRC connection request message sent by the UE includes first index information, and the first index information is corresponding to an RRC configuration scheme in the RRC configuration index table; and determine, in the RRC configuration index table stored by the storage module, the RRC configuration scheme corresponding to the first index information, acquire the RRC configuration information of the UE according to the RRC configuration scheme corresponding to the first index information, establish an RRC connection for the UE according to the RRC configuration information of the UE, and send a first RRC connection setup message to the UE.

With reference to the ninth possible implementation manner of the third aspect, in a tenth possible implementation manner, the first RRC connection setup message sent by the processing module includes second index information, the second index information is corresponding to an RRC configuration scheme in the RRC configuration index table stored by the UE, and the second index information is used to instruct the UE to determine, in the RRC configuration index table, the RRC configuration scheme corresponding to the second index information; and
the processing module is configured to acquire the RRC configuration information of the UE according to the RRC configuration scheme, and establish an RRC connection by using the RRC configuration information.

With reference to the third aspect or the first possible implementation manner of the third aspect, in an eleventh possible implementation manner, the processing module is further configured to receive an RRC connection request message sent by the UE, where the RRC connection request message carries a non-access stratum NAS message, and the NAS message is used to request RRC configuration information of the UE from the core network device;
the processing module is further configured to send the NAS message to the core network device, so that the core network device determines the RRC configuration information of the UE according to the NAS message, and returns the RRC configuration information of the UE to the processing module; and
the processing module is further configured to send a first RRC connection setup message to the UE, and establish an RRC connection to the UE according to the RRC configuration information of the UE, where the first RRC connection setup message carries an RRC connection reconfiguration message and an RRC security mode signaling message.

According to a fourth aspect, an embodiment of the present invention provides an apparatus for establishing a radio resource control RRC connection, where the apparatus includes:
a receiving module, configured to receive a first RRC connection setup message sent by a base station, where the first RRC connection setup message is used to instruct the UE to establish an RRC connection by using a simplified RRC process, where the simplified RRC process refers to establishing an RRC connection by using acquired RRC configuration information of the UE; and
a processing module, configured to establish an RRC connection by using the simplified RRC process.

In a first possible implementation manner, the apparatus further includes:
an acquiring module, configured to acquire the RRC configuration information of the UE.

With reference to the first possible implementation manner of the fourth aspect, in a second possible implementation manner, the apparatus further includes:
a first sending module, configured to determine that switching from an RRC connected mode to an RRC idle mode is needed, and send an RRC connection release request message to the base station, where
the receiving module is further configured to receive an RRC connection release message that is sent by the base station according to the RRC connection release request message, where the RRC connection release message is used to instruct the UE to switch to the RRC idle mode, the RRC connection release message carries a first indication message, and the first indication message is used to instruct the UE to store RRC configuration information used for establishing a current RRC connection.

With reference to the second possible implementation manner of the fourth aspect, in a third possible implementation manner, the acquiring module is specifically configured to: in response to the first indication message in the RRC connection release message received by the receiving module, store the RRC configuration information used for establishing the current RRC connection, where the RRC configuration information used for establishing the current RRC connection is the RRC configuration information of the UE.

With reference to the second possible implementation manner or the third possible implementation manner of the fourth aspect, in a fourth possible implementation manner, the first sending module is configured to determine that switching from the RRC idle mode to the RRC connected mode is needed, and send an RRC connection request message to the base station, where the RRC connection request message includes a second indication message, and the second indication message is used to indicate that the RRC configuration information is stored in the UE.

With reference to the second possible implementation manner or the third possible implementation manner of the fourth aspect, in a fifth possible implementation manner, the RRC connection release message received by the receiving module carries a non-contention dedicated preamble preamble; and
the first sending module is configured to send the non-contention dedicated preamble to the base station, so as to access the base station, where the non-contention dedicated preamble is used to indicate that the RRC configuration information is stored in the UE.

With reference to the fourth possible implementation manner or the fifth possible implementation manner of the fourth aspect, in a sixth possible implementation manner, the first RRC connection setup message received by the receiving module is used to instruct the UE to establish an RRC connection according to the RRC configuration information stored by the acquiring module; and
the processing module is configured to establish, in response to the first RRC connection setup message received by the receiving module, an RRC connection according to the RRC configuration information stored by the acquiring module.

With reference to the second possible implementation manner of the fourth aspect, the third possible implementation manner of the fourth aspect, the fourth possible implementation manner of the fourth aspect, the fifth possible implementation manner of the fourth aspect, or the sixth possible implementation manner of the fourth aspect, in a seventh possible implementation manner, the first RRC connection setup message received by the receiving module carries an RRC connection reconfiguration message and an RRC security mode signaling message.

With reference to the first possible implementation manner of the fourth aspect, in an eighth possible implementation manner, the apparatus further includes:
a storage module, configured to store an RRC configuration index table, where the RRC configuration index table includes at least one RRC configuration scheme, determine an RRC configuration scheme of the UE from the stored RRC configuration index table according to a moving speed of the UE and/or a service requirement of the UE, and acquire RRC configuration information of the UE according to the RRC configuration scheme of the UE.

With reference to the eighth possible implementation manner of the fourth aspect, in a ninth possible implementation manner, the apparatus further includes:
a detection module, configured to detect a current moving speed of the UE and/or a current service requirement of the UE, and determine first index information, where the first index information is corresponding to an RRC configuration scheme in the RRC configuration index table; and
a second sending module, configured to send an RRC connection request message to the base station, where the RRC connection request message includes the first index information determined by the detection module, the first index information is used to instruct the base station to determine the RRC configuration information of the UE, and the RRC configuration index table is stored in the base station.

With reference to the eighth possible implementation manner or the ninth possible implementation manner of the fourth aspect, in a tenth possible implementation manner, the first RRC connection setup message received by the receiving module includes second index information, the second index information is corresponding to an RRC configuration scheme in the RRC configuration index table, and the second index information is used to instruct the processing module to determine an RRC configuration scheme in the RRC configuration index table stored by the storage module and establish an RRC connection by using the determined RRC configuration scheme.

With reference to the tenth possible implementation manner of the fourth aspect, in an eleventh possible implementation manner, the acquiring module is configured to determine, in the configuration index table stored by the storage module, the RRC configuration scheme corresponding to the second index information, and acquire the RRC configuration information of the UE according to the RRC configuration scheme.

With reference to the eleventh possible implementation manner of the fourth aspect, in a twelfth possible implementation manner, the processing module is configured to establish an RRC connection by using the RRC configuration information of the UE acquired by the acquiring module.

With reference to the first possible implementation manner of the fourth aspect, in a thirteenth possible implementation manner, the apparatus further includes:
a third sending module, configured to send an RRC connection request message to the base station, where the RRC connection request information carries a non-access stratum NAS message, and the NAS message needs to be reported by the base station to a core network device, so that the core network device determines the RRC configuration information of the UE, and returns the RRC configuration information of the UE to the base station.

With reference to the thirteenth possible implementation manner of the fourth aspect, in a fourteenth possible implementation manner, the acquiring module is configured to receive the RRC configuration information of the UE that is determined by the core network device and forwarded by the base station; and
the processing module is configured to establish an RRC connection according to the RRC configuration information of the UE acquired by the acquiring module;
where the first RRC connection setup message received by the receiving module carries an RRC connection reconfiguration message and an RRC security mode signaling message.

According to a fifth aspect, an embodiment of the present invention provides a base station, where the base station includes:
a processor, configured to determine that user equipment UE needs to switch from an RRC connected mode to an RRC idle mode, and determine that a simplified RRC process is used when the UE establishes a next RRC connection, where the simplified RRC process refers to establishing an RRC connection by using acquired RRC configuration information of the UE, where
the processor is further configured to: when the UE requests to establish a next RRC connection, establish an RRC connection for the UE by using the simplified RRC process.

In a first possible implementation manner, the processor is specifically configured to determine that a bearer type of the UE remains unchanged in a set period of time, to determine that the simplified RRC process is used when the UE establishes a next RRC connection;
or
the processor is specifically configured to determine that a time when the UE camps on a current cell is longer than a set period of time, to determine that the simplified RRC process is used when the UE establishes a next RRC connection;
or
the processor is specifically configured to determine that a moving speed of the UE is less than or equal to a set value, to determine that the simplified RRC process is used when the UE establishes a next RRC connection;
or
the processor is specifically configured to determine that load of a cell in which the UE is located is less than a set value, to determine that the simplified RRC process is used when the UE establishes a next RRC connection.

With reference to the fifth aspect or the first possible implementation manner of the fifth aspect, in a second possible implementation manner, the base station further includes:
a first transmitter, configured to send an RRC connection release message to the UE, where the RRC connection release message carries a first indication message, and the first indication message is used to instruct the UE to store RRC configuration information used for establishing a current RRC connection; and
the processor is specifically configured to acquire RRC configuration information of the UE, establish, in response to a received RRC connection request message sent by the UE, an RRC connection for the UE according to the RRC configuration information of the UE, and instruct the first transmitter to send a first RRC connection setup message to the UE, where the first RRC connection setup message is used to instruct the UE to establish an RRC connection by using the stored RRC configuration information.

With reference to the second possible implementation manner of the fifth aspect, in a third possible implementation manner, the base station further includes:
a first memory, configured to store a context context of the UE, and from the context of the UE;
   or
the first memory, configured to store an RRC configuration parameter of the UE and an identifier of the UE that are used when the UE establishes a previous RRC connection, where the RRC configuration parameter of the UE and the identifier of the UE are the RRC configuration information of the UE, where
the processor is configured to acquire the RRC configuration information of the UE from the context of the UE stored by the first memory, or acquire the RRC configuration information of the UE according to the RRC configuration parameter of the UE and the identifier of the UE that are stored by the first memory.

With reference to the third possible implementation manner of the fifth aspect, in a fourth possible implementation manner, the base station further includes:
a first timer, configured to start timing when it is determined that the UE switches to the RRC idle mode, where
the first memory is configured to: when it is determined that the first timer times out, delete the stored context context of the UE; or
the first memory is further configured to: when it is determined that the first timer times out, delete the stored RRC configuration parameter of the UE and the stored identifier of the UE.

With reference to the second possible implementation manner, the third possible implementation manner, or the fourth possible implementation manner of the fifth aspect, in a fifth possible implementation manner, the base station further includes:
a first receiver, configured to receive the RRC connection request message sent by the UE, where the RRC connection request message includes a second indication message, and the second indication message is used to indicate whether the RRC configuration information is stored in the UE, where
the processor is configured to acquire the second indication message from the RRC connection request message received by the first receiver, determine, according to the second indication message, that the RRC configuration information is stored in the UE, establish an RRC connection for the UE according to the RRC configuration information of the UE, and instruct the first transmitter to send the first RRC connection setup message to the UE, to instruct the UE to establish an RRC connection according to the RRC configuration information stored by the UE.

With reference to the second possible implementation manner, the third possible implementation manner, or the fourth possible implementation manner of the fifth aspect, in a sixth possible implementation manner, the first transmitter is further configured to add a non-contention dedicated preamble preamble to the RRC connection release message; and
the processor is configured to determine that a preamble sent by the UE is the non-contention dedicated preamble, to determine that the RRC configuration information is stored in the UE, establish an RRC connection for the UE according to the RRC configuration information of the UE, and instruct the first transmitter to send the first RRC connection setup message to the UE.

With reference to the fifth possible implementation manner or the sixth possible implementation manner of the fifth aspect, in a seventh possible implementation manner, the first RRC connection setup message sent by the first transmitter carries an RRC connection reconfiguration message and an RRC security mode signaling message.

With reference to the fifth aspect or the first possible implementation manner of the fifth aspect, in an eighth possible implementation manner, the base station further includes:
a second memory, configured to store an RRC configuration index table, where the RRC configuration index table includes at least one RRC configuration scheme, determine an RRC configuration scheme of the UE from the stored RRC configuration index table according to the moving speed of the UE and/or a service requirement of the UE, and acquire RRC configuration information of the UE according to the RRC configuration scheme of the UE.

With reference to the eighth possible implementation manner of the fifth aspect, in a ninth possible implementation manner, the base station further includes:
a second receiver, configured to receive an RRC connection request message sent by the UE, where the RRC connection request message sent by the UE includes first index information, and the first index information is corresponding to an RRC configuration scheme in the RRC configuration index table; and
a second transmitter, configured to send a first RRC connection setup message to the UE, where
the processor is configured to determine, in the RRC configuration index table stored by the second memory, the RRC configuration scheme corresponding to the first index information, acquire the RRC configuration information of the UE according to the RRC configuration scheme corresponding to the first index information, establish an RRC connection for the UE according to the RRC configuration information of the UE, and instruct the second transmitter to send the first RRC connection setup message to the UE.

With reference to the ninth possible implementation manner of the fifth aspect, in a tenth possible implementation manner, the first RRC connection setup message sent by the second transmitter includes second index information, the second index information is corresponding to an RRC configuration scheme in the RRC configuration index table stored by the UE, and the second index information is used to instruct the UE to determine, in the RRC configuration index table, the RRC configuration scheme corresponding to the second index information; and
the processor is configured to acquire the RRC configuration information of the UE according to the RRC configuration scheme, and establish an RRC connection by using the RRC configuration information.

With reference to the fifth aspect or the first possible implementation manner of the fifth aspect, in an eleventh possible implementation manner, the base station further includes:
a third receiver, configured to receive an RRC connection request message sent by the UE, where the RRC connection request message carries a non-access stratum NAS message, and the NAS message is used to request RRC configuration information of the UE from the core network device; and
a third transmitter, configured to send the NAS message received by the third receiver to the core network device, so that the core network device determines the RRC configuration information of the UE according to the NAS message, and returns the RRC configuration information of the UE to the base station, where
the third transmitter is further configured to send a first RRC connection setup message to the UE, and establish an RRC connection to the UE according to the RRC configuration information of the UE, where the first RRC connection setup message carries an RRC connection reconfiguration message and an RRC security mode signaling message.

According to a sixth aspect, an embodiment of the present invention further provides user equipment UE, where the UE includes:
a receiver, configured to receive a first RRC connection setup message sent by a base station, where the first RRC connection setup message is used to instruct the UE to establish an RRC connection by using a simplified RRC process, where the simplified RRC process refers to establishing an RRC connection by using acquired RRC configuration information of the UE; and
a processor, configured to establish an RRC connection by using the simplified RRC process.

In a first possible implementation manner, the processor is further configured to acquire RRC configuration information of the UE.

With reference to the first possible implementation manner of the sixth aspect, in a second possible implementation manner, the base station further includes:
a first transmitter, configured to determine that switching from an RRC connected mode to an RRC idle mode is needed, and send an RRC connection release request message to the base station, where
the receiver is further configured to receive an RRC connection release message that is sent by the base station according to the RRC connection release request message, where the RRC connection release message is used to instruct the UE to switch to the RRC idle mode, the RRC connection release message carries a first indication message, and the first indication message is used to instruct the UE to store RRC configuration information used for establishing a current RRC connection.

With reference to the second possible implementation manner of the sixth aspect, in a third possible implementation manner, the UE further includes:
a first memory, configured to: in response to the first indication message in the RRC connection release message received by the receiver, store the RRC configuration information used for establishing the current RRC connection, where
the processor is configured to determine that the RRC configuration information that is used for establishing the current RRC connection and stored by the first memory is the RRC configuration information of the UE.

With reference to the second possible implementation manner or the third possible implementation manner of the sixth aspect, in a fourth possible implementation manner, the first transmitter is further configured to determine that switching from the RRC idle mode to the RRC connected mode is needed, and send an RRC connection request message to the base station, where the RRC connection request message includes a second indication message, and the second indication message is used to indicate that the RRC configuration information is stored in the UE.

With reference to the second possible implementation manner or the third possible implementation manner of the sixth aspect, in a fifth possible implementation manner, the RRC connection release message received by the receiver carries a non-contention dedicated preamble preamble; and
the first transmitter is configured to send the non-contention dedicated preamble to the base station, so as to access the base station, where the non-contention dedicated preamble is used to indicate that the RRC configuration information is stored in the UE.

With reference to the fourth possible implementation manner or the fifth possible implementation manner of the sixth aspect, in a sixth possible implementation manner, the first RRC connection setup message received by the receiver is used to instruct the UE to establish an RRC connection according to the RRC configuration information stored by the first memory; and
the processor is configured to establish, in response to the first RRC connection setup message received by the receiver, an RRC connection according to the RRC configuration information stored by the first memory.

With reference to the second possible implementation manner of the sixth aspect, the third possible implementation manner of the sixth aspect, the fourth possible implementation manner of the sixth aspect, the fifth possible implementation manner of the sixth aspect, or the sixth possible implementation manner of the sixth aspect, in a seventh possible implementation manner, the first RRC connection setup message received by the receiver carries an RRC connection reconfiguration message and an RRC security mode signaling message.

With reference to the first possible implementation manner of the sixth aspect, in an eighth possible implementation manner, the UE further includes:
a second memory, configured to store an RRC configuration index table, where the RRC configuration index table includes at least one RRC configuration scheme, determine an RRC configuration scheme of the UE from the stored RRC configuration index table according to a moving speed of the UE and/or a service requirement of the UE, and acquire RRC configuration information of the UE according to the RRC configuration scheme of the UE.

With reference to the eighth possible implementation manner of the sixth aspect, in a ninth possible implementation manner, the processor is configured to detect a current moving speed of the UE and/or a current service requirement of the UE, and determine first index information, where the first index information is corresponding to an RRC configuration scheme in the RRC configuration index table; and
the UE further includes a second transmitter, configured to send an RRC connection request message to the base station, where the RRC connection request message includes the first index information determined by the processor, the first index information is used to instruct the base station to determine the RRC configuration information of the UE, and the RRC configuration index table is stored in the base station.

With reference to the eighth possible implementation manner or the ninth possible implementation manner of the sixth aspect, in a tenth possible implementation manner, the first RRC connection setup message received by the receiver includes second index information, the second index information is corresponding to an RRC configuration scheme in the RRC configuration index table, and the second index information is used to instruct the processor to determine an RRC configuration scheme in the RRC configuration index table stored by the second memory and establish an RRC connection by using the determined RRC configuration scheme.

With reference to the tenth possible implementation manner of the sixth aspect, in an eleventh possible implementation manner, the processor is further configured to determine, in the configuration index table stored by the second memory, the RRC configuration scheme corresponding to the second index information, and acquire the RRC configuration information of the UE according to the RRC configuration scheme.

With reference to the eleventh possible implementation manner of the sixth aspect, in a twelfth possible implementation manner, the processor is configured to establish an RRC connection by using the acquired RRC configuration information of the UE.

With reference to the first possible implementation manner of the sixth aspect, in a thirteenth possible implementation manner, the UE further includes:
a third transmitter, configured to send an RRC connection request message to the base station, where the RRC connection request information carries a non-access stratum NAS message, and the NAS message needs to be reported by the base station to a core network device, so that the core network device determines the RRC configuration information of the UE, and returns the RRC configuration information of the UE to the base station.

With reference to the thirteenth possible implementation manner of the sixth aspect, in a fourteenth possible implementation manner, the receiver is configured to receive the RRC configuration information of the UE that is determined by the core network device and forwarded by the base station; and
the processor is configured to establish an RRC connection according to the RRC configuration information of the UE received by the receiver;
where the first RRC connection setup message received by the receiver carries an RRC connection reconfiguration message and an RRC security mode signaling message.

According to the method and apparatus for establishing an RRC connection provided in the embodiments of the present invention, when an RRC connection needs to be established, a UE and a base station can establish RRC by using existing RRC configuration information, without a need of reconfiguring an RRC parameter. Compared with the prior art, the method and apparatus provided in the embodiments of the present invention can reduce transmission of RRC signaling in an RRC connection establishment process, so that fewer physical layer scheduling resources are occupied, and utilization of physical layer resources is improved.

### BRIEF DESCRIPTION OF DRAWINGS

To describe the technical solutions in the embodiments of the present invention or in the prior art more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of establishing an RRC connection in the prior art;
FIG. 2 is a schematic flowchart of a method for establishing an RRC connection according to Embodiment 1 of the present invention;
FIG. 3 is a schematic flowchart of a method for establishing an RRC connection according to Embodiment 2 of the present invention;
FIG. 4 is a schematic flowchart of a method for establishing an RRC connection according to Embodiment 3 of the present invention;
FIG. 5 is a schematic flowchart of a method for establishing an RRC connection according to Embodiment 4 of the present invention;
FIG. 6 is a schematic flowchart of a method for establishing an RRC connection according to Embodiment 5 of the present invention;
FIG. 7 is a structural block diagram of an apparatus for establishing an RRC connection according to Embodiment 6 of the present invention;
FIG. 8 is another structural block diagram of an apparatus for establishing an RRC connection according to Embodiment 6 of the present invention;
FIG. 9 is still another structural block diagram of an apparatus for establishing an RRC connection according to Embodiment 6 of the present invention;
FIG. 10 is a structural block diagram of an apparatus for establishing an RRC connection according to Embodiment 7 of the present invention;
FIG. 11 is another structural block diagram of an apparatus for establishing an RRC connection according to Embodiment 7 of the present invention;
FIG. 12 is still another structural block diagram of an apparatus for establishing an RRC connection according to Embodiment 7 of the present invention;
FIG. 13 is yet another structural block diagram of an apparatus for establishing an RRC connection according to Embodiment 7 of the present invention;
FIG. 14 is a structural block diagram of a base station according to Embodiment 8 of the present invention;
FIG. 15 is another structural block diagram of a base station according to Embodiment 8 of the present invention;
FIG. 16 is still another structural block diagram of a base station according to Embodiment 8 of the present invention;
FIG. 17 is yet another structural block diagram of a base station according to Embodiment 8 of the present invention;
FIG. 18 is a structural block diagram of user equipment UE according to Embodiment 9 of the present invention;
FIG. 19 is another structural block diagram of user equipment UE according to Embodiment 9 of the present invention;
FIG. 20 is still another structural block diagram of user equipment UE according to Embodiment 9 of the present invention; and
FIG. 21 is yet another structural block diagram of user equipment UE according to Embodiment 9 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

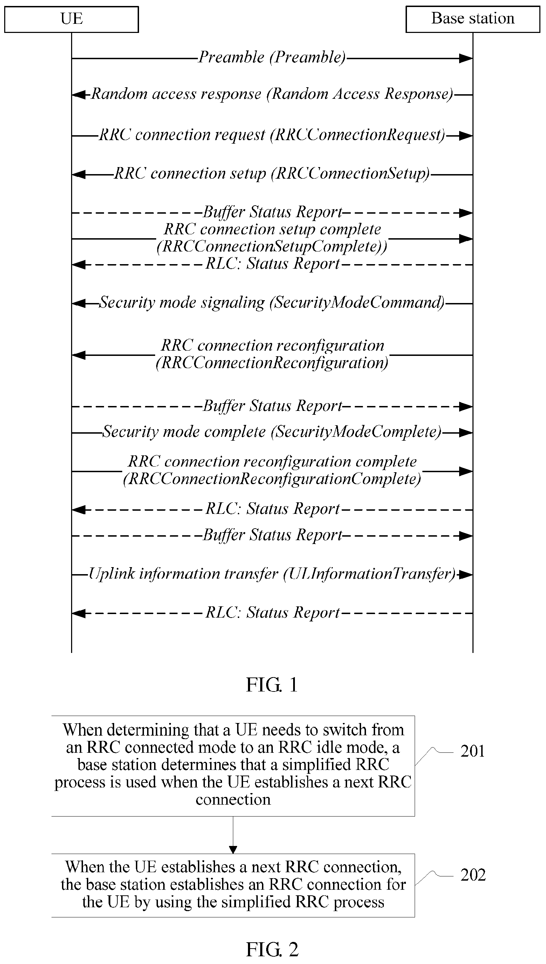

In the prior art, a process of establishing an RRC connection is shown in FIG. 1: A UE sends an RRC connection request message to a base station; after receiving the RRC connection request message sent by the UE, the base station returns an RRC setup message to the UE; after receiving an RRC connection setup complete message sent by the UE, the base station needs to send a security mode command and an RRC connection reconfiguration message to the UE, to transmit security signaling related to the RRC connection, and an RRC parameter matching a service type of the UE.

### Embodiment 1

This embodiment of the present invention provides a method for establishing a radio resource control RRC connection, where the method is applied to a base station. As shown in FIG. 2, the method includes:
201: When determining that a UE needs to switch from an RRC connected mode to an RRC idle mode, a base station determines that a simplified RRC process is used when the UE establishes a next RRC connection, where the simplified RRC process refers to that the base station and the UE establish an RRC connection by using acquired RRC configuration information of the UE.

Specifically, the base station may use the following methods to determine whether an RRC process is used when the UE establishes a next RRC connection:
(1) determining that a bearer type of the UE remains unchanged in a set period of time, to determine that the simplified RRC process is used when the UE establishes a next RRC connection;
   or
(2) determining that a time when the UE camps on a current cell is longer than a set period of time, to determine that the simplified RRC process is used when the UE establishes a next RRC connection;
   or
(3) determining that a moving speed of the UE is less than or equal to a set value, to determine that the simplified RRC process is used when the UE establishes a next RRC connection;
   or
(4) determining that load of a cell in which the UE is located is less than a set value, to determine that the simplified RRC process is used when the UE establishes a next RRC connection.

202: When the UE establishes a next RRC connection, the base station establishes an RRC connection for the UE by using the simplified RRC process.

It should be noted that, in this embodiment, the base station may acquire the RRC configuration information of the UE in a direct manner or an indirect manner, and does not need to perform reconfiguration for establishment of the RRC connection.

For ease of understanding, this embodiment provides a typical case for reference: When service characteristics of services requested by the UE in a period of time are the same or similar, or when the UE continuously camps on a current cell in a period of time, if the UE needs to re-establish an RRC connection, a new RRC connection may be established between the UE and the base station according to RRC configuration information used when a previous RRC connection is established, and reconfiguration is not needed. For example, in a possible actual application scenario, the UE requests to run a web page browsing service, and the base station and the UE establish a first RRC connection; after the UE cuts off the first RRC connection, if the UE requests to run the web page browsing service again, the base station and the UE may establish a second RRC connection by directly using the RRC configuration information that is used for establishing the first RRC connection.

In the method for establishing an RRC connection provided in this embodiment of the present invention, when determining that the UE needs to establish an RRC connection, the base station can establish an RRC connection by using acquired RRC configuration information, without a need of performing reconfiguration or transmitting the RRC configuration information by using RRC signaling. Compared with the prior art, by using the method provided in this embodiment of the present invention, in a process of establishing an RRC connection, it is unnecessary to configure the RRC configuration information or transmit the RRC configuration information by using the RRC signaling; therefore, transmission of the RRC signaling can be reduced, fewer physical layer scheduling resources are occupied, and utilization of physical layer resources is improved.

The method for establishing an RRC connection provided in this embodiment includes at least the following three specific implementation manners.

First specific implementation manner:
before step 202, the method further includes: sending an RRC connection release message to the UE, where the RRC connection release message carries a first indication message, and the first indication message is used to instruct the UE to store RRC configuration information used for establishing a current RRC connection; and
step 202 specifically includes: acquiring RRC configuration information of the UE; and establishing, in response to a received RRC connection request message sent by the UE, an RRC connection for the UE according to the RRC configuration information of the UE, and sending a first RRC connection setup message to the UE, where the first RRC connection setup message is used to instruct the UE to establish an RRC connection by using the stored RRC configuration information.

The acquiring RRC configuration information of the UE includes: determining that the simplified RRC process is used when the UE establishes a next RRC connection, storing a context context of the UE, and acquiring the RRC configuration information of the UE from the context of the UE; or
determining that the simplified RRC process is used when the UE establishes a next RRC connection, and storing an RRC configuration parameter of the UE and an identifier of the UE that are used when the UE establishes a previous RRC connection, where the RRC configuration parameter of the UE and the identifier of the UE are the RRC configuration information of the UE.

Optionally, to improve utilization of storage space, the method further includes: starting a first timer; and
when it is determined that the first timer times out, deleting the stored context context of the UE; or
when it is determined that the first timer times out, deleting the stored RRC configuration parameter of the UE and the stored identifier of the UE.

To determine whether the RRC configuration information is stored in the UE, at least the following two methods may be used.
Method 1:
   the RRC connection request message sent by the UE includes a second indication message, where the second indication message is used to indicate whether the RRC configuration information is stored in the UE; and
   the establishing, in response to a received RRC connection request message sent by the UE, an RRC connection for the UE according to the RRC configuration information of the UE, and sending a first RRC connection setup message to the UE includes: receiving the RRC connection request message sent by the UE, acquiring the second indication message from the RRC connection request message, and determining, according to the second indication message, that the RRC configuration information is stored in the UE; and establishing the RRC connection for the UE according to the RRC configuration information of the UE, and sending the first RRC connection setup message to the UE, to instruct the UE to establish an RRC connection according to the RRC configuration information stored by the UE.
Method 2:
   adding a non-contention dedicated preamble preamble to the RRC connection release message sent to the UE; and
   the establishing, in response to a received RRC connection request message sent by the UE, an RRC connection for the UE according to the RRC configuration information of the UE, and sending a first RRC connection setup message to the UE includes: determining that a preamble sent by the UE is the non-contention dedicated preamble, to determine that the RRC configuration information is stored in the UE, establishing the RRC connection for the UE according to the RRC configuration information of the UE, and sending the first RRC connection setup message to the UE.

In the first specific implementation manner, the first RRC connection setup message carries an RRC connection reconfiguration message and an RRC security mode signaling message.

The foregoing is an implementation method of the first specific implementation manner.

Second specific implementation manner:
the base station stores an RRC configuration index table, where the RRC configuration index table includes at least one RRC configuration scheme, determines an RRC configuration scheme of the UE from the stored RRC configuration index table according to a moving speed of the UE and/or a service requirement of the UE, and acquires the RRC configuration information of the UE according to the RRC configuration scheme of the UE; and
step 202 specifically includes: receiving an RRC connection request message sent by the UE, where the RRC connection request message sent by the UE includes first index information, and the first index information is corresponding to an RRC configuration scheme in the RRC configuration index table; determining, in the RRC configuration index table, the RRC configuration scheme corresponding to the first index information, acquiring the RRC configuration information of the UE according to the RRC configuration scheme corresponding to the first index information, establishing an RRC connection for the UE according to the RRC configuration information of the UE, and sending a first RRC connection setup message to the UE.

In this specific implementation manner, the RRC configuration index table is stored in the UE; and
the first RRC connection setup message includes second index information, the second index information is corresponding to an RRC configuration scheme in the RRC configuration index table stored by the UE, and the second index information is used to instruct the UE to determine, in the RRC configuration index table, the RRC configuration scheme corresponding to the second index information, acquire the RRC configuration information of the UE according to the RRC configuration scheme, and establish an RRC connection by using the RRC configuration information.

The foregoing is an implementation method of the second specific implementation manner.

Third specific implementation manner:
before step 202, the method further includes:
   receiving an RRC connection request message sent by the UE, where the RRC connection request message carries an NAS (Non-Access Stratum, non-access stratum) message, and the NAS message is used to request RRC configuration information of the UE from the core network device; and
   sending the NAS message to the core network device, so that the core network device determines the RRC configuration information of the UE according to the NAS message, and returns the RRC configuration information of the UE to the base station; and
   step 202 specifically includes: sending, by the base station, a first RRC connection setup message to the UE, and establishing an RRC connection to the UE according to the RRC configuration information of the UE, where the first RRC connection setup message carries an RRC connection reconfiguration message and an RRC security mode signaling message.

The foregoing is an implementation method of the third specific implementation manner.

### Embodiment 2

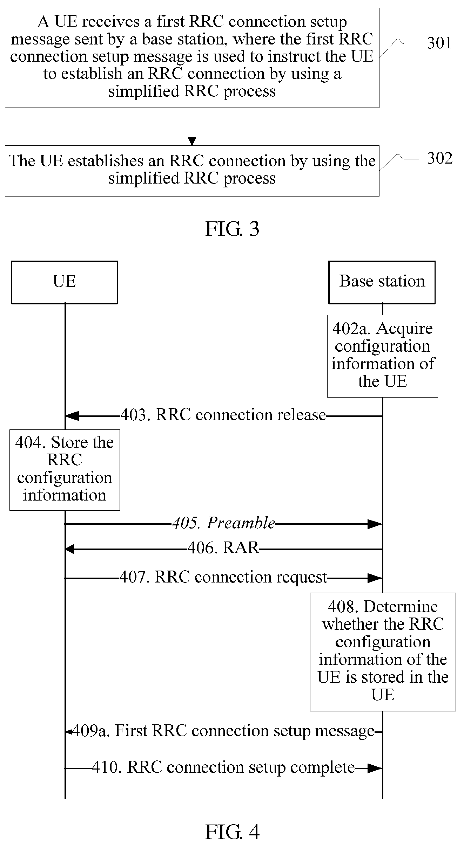

This embodiment of the present invention provides a method for establishing a radio resource control RRC connection. As shown in FIG. 3, the method includes:
301: A UE receives a first RRC connection setup message sent by a base station, where the first RRC connection setup message is used to instruct the UE to establish an RRC connection by using a simplified RRC process, where the simplified RRC process refers to establishing an RRC connection by using acquired RRC configuration information of the UE.

It should be noted that, in this embodiment, the UE may acquire the RRC configuration information of the UE in a direct manner or an indirect manner, and in a process of acquiring the RRC configuration information, the UE does not need to transmit RRC signaling with the base station.

For ease of understanding, this embodiment provides a typical case for reference: When service characteristics of services requested by the UE in a period of time are the same or similar, or when the UE continuously camps on a current cell in a period of time, if the UE needs to re-establish an RRC connection, a new RRC connection may be established between the UE and the base station according to RRC configuration information used when a previous RRC connection is established, so that in a process of establishing an RRC connection, the UE does not need to acquire the RRC configuration information by receiving RRC signaling sent by the base station, which can reduce transmission of the RRC signaling. In a possible actual application scenario, for example, the UE requests to run a web page browsing service, and the base station and the UE establish a first RRC connection; after the UE cuts off the first RRC connection, if the UE requests to run the web page browsing service again, the UE and the base station may establish a second RRC connection by directly using the RRC configuration information that is used for establishing the first RRC connection.

302: The UE establishes an RRC connection by using the simplified RRC process.

In the method for establishing an RRC connection provided in this embodiment of the present invention, when an RRC connection needs to be established, a UE may use a simplified RRC process according to an indication of a base station, to establish an RRC connection, without a need of transmitting RRC configuration information by using RRC signaling. Compared with the prior art, by using the method provided in this embodiment of the present invention, in a process of establishing an RRC connection, it is unnecessary to transmit the RRC configuration information by using the RRC signaling; therefore, transmission of the RRC signaling can be reduced, fewer physical layer scheduling resource granularities are occupied, and utilization of physical layer resources is improved.

The method for establishing an RRC connection provided in this embodiment includes at least the following three specific implementation manners.

First specific implementation manner:
before step 302, the method further includes: acquiring, by the UE, RRC configuration information of the UE; and
before step 301, the method further includes: establishing, by the UE, an RRC connection to the base station; determining, by the UE, that the UE needs to switch from an RRC connected mode to an RRC idle mode, and sending an RRC connection release request message to the base station, so that the base station sends an RRC connection release message to the UE; receiving the RRC connection release message sent by the base station, and switching to the RRC idle mode according to the RRC connection release message, where the RRC connection release message carries a first indication message, and the first indication message is used to instruct the UE to store RRC configuration information used for establishing a current RRC connection.

The acquiring RRC configuration information of the UE includes: storing, by the UE in response to the first indication message in the RRC connection release message, the RRC configuration information used for establishing the current RRC connection, and determining that the RRC configuration information used for establishing the current RRC connection is the RRC configuration information of the UE.

After completing the storing the RRC configuration information of the UE, the UE may use the following two methods to notify the base station, so that the base station determines that the RRC configuration information is stored in the UE.
Method 1:
   after the receiving the RRC connection release message sent by the base station, and switching to the RRC idle mode according to the RRC connection release message, the method further includes: determining, by the UE, that the UE needs to switch from the RRC idle mode to the RRC connected mode, and sending an RRC connection request message to the base station, where the RRC connection request message includes a second indication message, and the second indication message is used to indicate that the RRC configuration information is stored in the UE.
Method 2:
   if the RRC connection release message received by the UE carries a non-contention dedicated preamble preamble, before the determining, by the UE, that the UE needs to switch from the RRC idle mode to the RRC connected mode, and sending an RRC connection request message to the base station, the method further includes: sending the non-contention dedicated preamble to the base station, so as to access the base station, where the non-contention dedicated preamble is used to indicate that the RRC configuration information is stored in the UE.

In the first specific implementation manner, the first RRC connection setup message is used to instruct the UE to establish an RRC connection according to the stored RRC configuration information; and
step 302 specifically includes: establishing, by the UE in response to the first RRC connection setup message, an RRC connection according to the stored RRC configuration information.

In the first specific implementation manner, the first RRC connection setup message received by the UE carries an RRC connection reconfiguration message and an RRC security mode signaling message.

The foregoing is an implementation method of the first specific implementation manner.

Second specific implementation manner:
before step 302, the method further includes: acquiring, by the UE, RRC configuration information of the UE.

In the second specific implementation manner, the UE stores an RRC configuration index table, where the RRC configuration index table includes at least one RRC configuration scheme, determines an RRC configuration scheme of the UE from the stored RRC configuration index table according to a moving speed of the UE and/or a service requirement of the UE, and acquires the RRC configuration information of the UE according to the RRC configuration scheme of the UE.

Before step 301, the method further includes: detecting a current moving speed of the UE and/or a current service requirement of the UE, and determining first index information, where the first index information is corresponding to an RRC configuration scheme in the RRC configuration index table; and sending an RRC connection request message to the base station, where the RRC connection request message includes the first index information, the first index information is used to instruct the base station to determine the RRC configuration information of the UE, and the RRC configuration index table is stored in the base station.

The first RRC connection setup message received by the UE includes second index information, the second index information is corresponding to an RRC configuration scheme in the RRC configuration index table, and the second index information is used to instruct the UE to determine an RRC configuration scheme in the RRC configuration index table, and establish an RRC connection by using the determined RRC configuration scheme.

The acquiring RRC configuration information of the UE includes: determining, in the configuration index table, the RRC configuration scheme corresponding to the second index information, and acquiring the RRC configuration information of the UE according to the RRC configuration scheme.

Step 302 specifically includes: establishing an RRC connection by using the acquired RRC configuration information of the UE.

The foregoing is an implementation method of the second specific implementation manner.

Third specific implementation manner:
before step 302, the method further includes: acquiring, by the UE, RRC configuration information of the UE; and
before step 301, the method further includes: sending an RRC connection request message to the base station, where the RRC connection request information carries an NAS message, and the NAS message needs to be reported by the base station to a core network device, so that the core network device determines the RRC configuration information of the UE, and returns the RRC configuration information of the UE to the base station.

The acquiring RRC configuration information of the UE includes: receiving the RRC configuration information of the UE that is determined by the core network device and forwarded by the base station.

Step 302 specifically includes: establishing an RRC connection by using the RRC configuration information of the UE. The first RRC connection setup message carries an RRC connection reconfiguration message and an RRC security mode signaling message.

The foregoing is an implementation method of the third specific implementation manner.

### Embodiment 3

Based on the embodiments shown in FIG. 2 and FIG. 3, this embodiment of the present invention further provides a method for establishing an RRC connection. As shown in FIG. 4, the method includes:
401: When a base station determines that UE needs to switch from an RRC connected mode to an RRC idle mode, the base station determines whether a simplified RRC process is used when the UE establishes a next RRC connection; if yes, perform 402a; or if not, perform 402b.

The simplified RRC process refers to that the base station and the UE establish an RRC connection by using acquired RRC configuration information of the UE.

For ease of understanding, this embodiment provides a typical case for reference: When service characteristics of services requested by the UE in a period of time are the same or similar, or when the UE continuously camps on a current cell in a period of time, if the UE needs to re-establish an RRC connection, the UE and the base station may establish a new RRC connection between the UE and the base station according to RRC configuration information used when a previous RRC connection is established, and reconfiguration is not needed. For example, in a possible actual application scenario, the UE requests to run a web page browsing service, and the base station and the UE establish a first RRC connection; after the UE cuts off the first RRC connection, if the UE requests to run the web page browsing service again, the base station and the UE may establish a second RRC connection by directly using the RRC configuration information that is used for establishing the first RRC connection.

Specifically, when the base station determines whether the simplified RRC process is used when the UE establishes a next RRC connection, the following methods may be used, but the method is not limited to the following ones:
(1) when a bearer type of the UE remains unchanged in a set period of time, determining that the simplified RRC process is used when the UE establishes a next RRC connection;
   or
(2) when a time when the UE camps on a current cell is longer than a set period of time, determining that the simplified RRC process is used when the UE establishes a next RRC connection;
   or
(3) when a moving speed of the UE is less than or equal to a set value, determining that the simplified RRC process is used when the UE establishes a next RRC connection;
   or
(4) when load of a cell in which the UE is located is less than a set value, determining that the simplified RRC process is used when the UE establishes a next RRC connection.

In this embodiment, when the UE needs to switch from an RRC connected mode to an RRC idle mode, the base station and the UE may store RRC configuration information used for establishing a current RRC connection, and determine that the stored RRC configuration information is RRC configuration information of the UE; and during establishment of a next RRC connection, the RRC configuration information of the UE may be directly used to establish the RRC connection. A specific implementation process is as follows:
402a: The base station acquires RRC configuration information of the UE.

The RRC configuration information of the UE is used by the base station to establish an RRC connection for the UE.

Specifically, the base station may acquire the RRC configuration information of the UE by using the following two methods.
Method 1:
   the base station stores a context (context) of the UE, and acquires the RRC configuration information of the UE from the context of the UE.
Method 2:
   the base station stores an RRC configuration parameter of the UE and an identifier of the UE that are used when the UE establishes a previous RRC connection, and determines that the RRC configuration parameter of the UE and the identifier of the UE are the RRC configuration information of the UE.

Optionally, to improve utilization of storage space of the base station, when storing the context of the UE, or the RRC configuration parameter of the UE and the identifier of the UE, the base station may start a first timer; and if the first timer times out, the base station deletes the stored context of the UE, or the stored RRC configuration parameter of the UE and the stored identifier of the UE.

402b: The base station deletes the RRC configuration information of the UE.

403: The base station sends an RRC connection release message to the UE, where the RRC connection release message carries a first indication message, and the first indication message is used to instruct the UE to store RRC configuration information used for establishing a current RRC connection.

Specifically, for an implementation manner for adding the first indication message to the RRC connection release message, this embodiment provides the following two specific implementation methods for reference:
(1) the base station may add, to the RRC connection release message, a new indication flag information element as the first indication message;
   or
(2) the base station may add, to the RRC connection release message, a non-contention dedicated preamble as the first indication message.

404: The UE receives the RRC connection release message, acquires the first indication message, releases the current RRC connection, and stores the RRC configuration information used for establishing the current RRC connection.

405: When needing to re-establish an RRC connection, the UE randomly selects a preamble, and initiates contention access to the base station.

406: The base station parses the preamble sent by the UE, and sends an RAR (Random Attach Response, random attach response) to the UE, to allow the UE to access the base station.

It should be noted that, the foregoing 405 to 406 describe an access process in which the UE accesses the base station in a contention manner. It should be emphasized that, if in step 403, the RRC connection release message carries a non-contention dedicated preamble, the UE may initiate non-contention access to the base station according to the non-contention dedicated preamble.

407: The UE receives the RAR, and sends an RRC connection request message to the base station, where the RRC connection request message carries a second indication message, and the second indication message is used to indicate whether the RRC configuration information is stored in the UE.

Specifically, the RRC connection request message further includes the identifier of the UE, a TMSI (Temporary Mobile Subscriber Identity, temporary mobile subscriber identity), and the like.

Optionally, an IE of the RRC connection request message may be modified to indicate whether a service type of the UE has changed. For example, a first RRC connection request message (RRCConnectionRequest message) may include the following content:

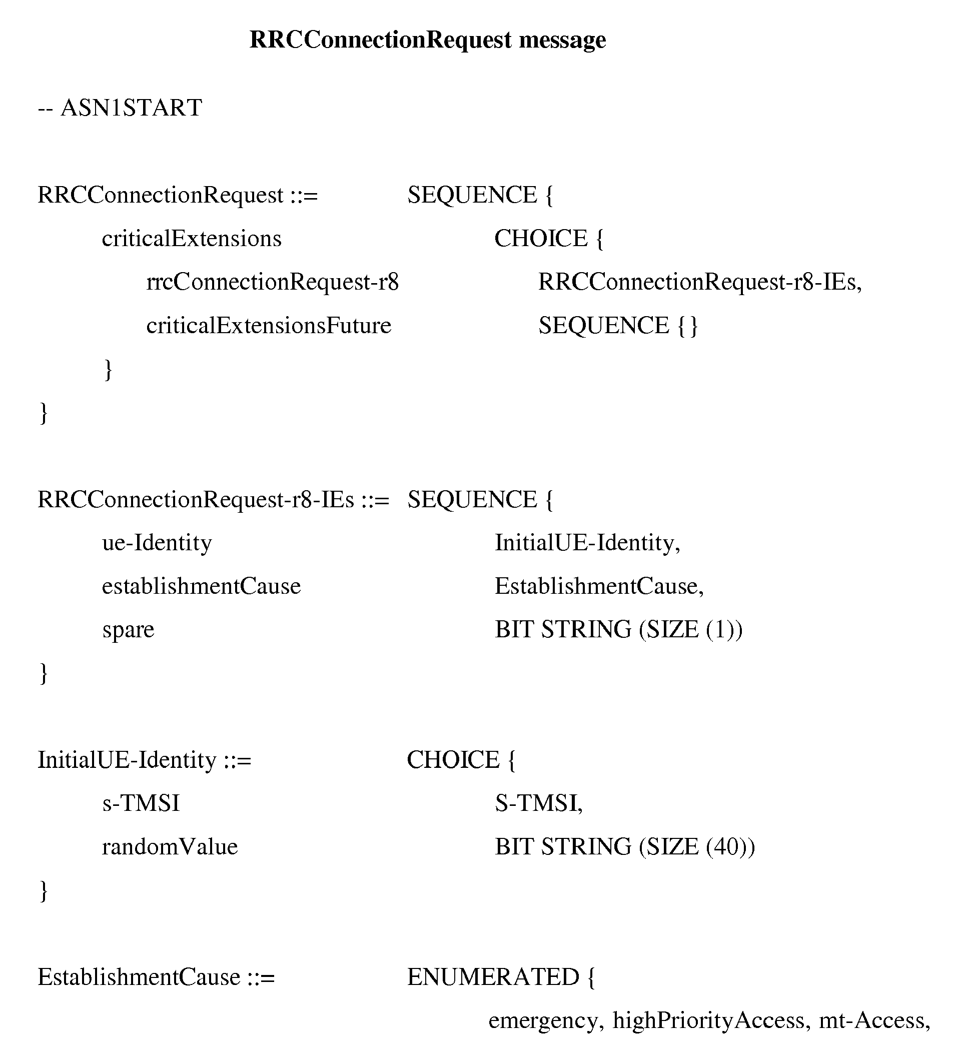

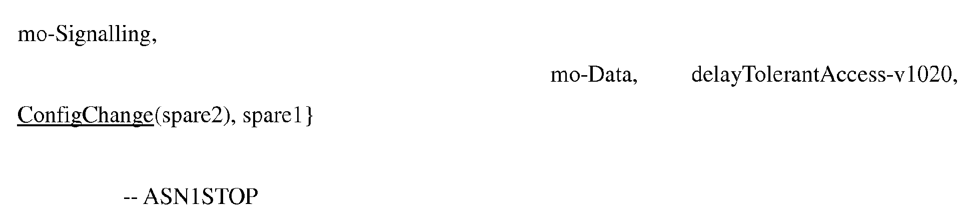

"ConfigChange" is a newly added item. ConfigChange = 1 indicates that currently, the service type of the UE has changed, and the UE does not store the RRC configuration information of the UE; ConfigChange = 0 indicates that the service type of the UE does not change, and the RRC configuration information is stored in the UE.

408: The base station receives the RRC connection request message, acquires the second indication message from the RRC connection request message, and determines, according to the second indication message, whether the RRC configuration information is stored in the UE; if yes, perform 409a; or if not, perform 409b.

409a: The base station establishes an RRC connection for the UE according to the stored RRC configuration information of the UE, and sends a first RRC connection setup message to the UE.

Specifically, the "first RRC connection setup message" in this embodiment is used to instruct the UE to establish an RRC connection according to the stored RRC configuration information. The "first RRC connection setup message" may be obtained by using, but not limited to, the following two methods.
Method 1:
   the base station may add an RRC connection reconfiguration message (RRCConnectionReconfiguration) and an RRC security mode signaling message (SecuutyModeCommand) to an existing RRC connection setup message, to obtain the first RRC connection setup message.

   By using the foregoing method, the RRC connection setup message, the RRC connection reconfiguration message and the RRC security mode signaling message can be sent to the UE by using one physical layer scheduling resource granularity, and a relatively small quantity of physical layer scheduling resource granularities is occupied; moreover, an acknowledgment message (that is, an RRC connection setup complete message) corresponding to the RRC connection setup message, an acknowledgment message (that is, an RRC connection reconfiguration complete message) corresponding to the RRC connection reconfiguration message, and an acknowledgment message (that is, RRC security mode signaling) corresponding to the RRC security mode signaling message may also be sent to the base station by using one physical layer scheduling resource granularity. Therefore, scheduling resources occupied during an RRC connection establishment process can be effectively reduced, and the resource utilization is improved.
Method 2:
   the base station modifies an information element of an existing RRC connection setup message, to obtain the first RRC connection setup message. For example, the first RRC connection setup message may include the following content:

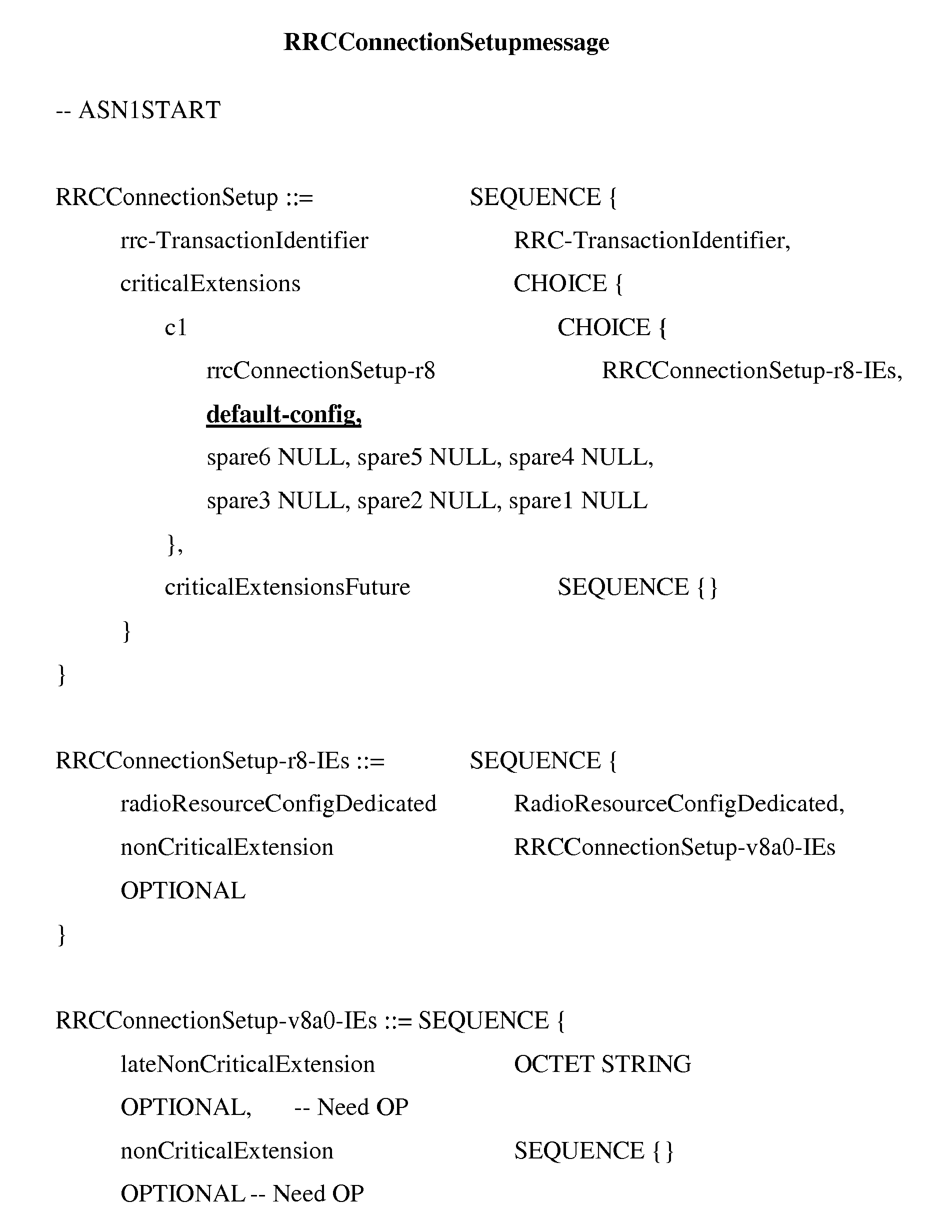

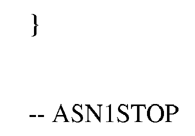

The foregoing "default-config" is a newly added item, and is used to instruct the UE to establish an RRC connection according to the stored RRC configuration information of the UE.

By using the foregoing method, the base station does not need to send the RRC connection reconfiguration message and an original RRC security mode signaling message to the UE, which can save physical layer scheduling resources.

409b: The base station reconfigures an RRC connection for the UE according to the method shown in FIG. 1, and notifies the UE of the RRC configuration information by using multiple pieces of RRC signaling.

By using the foregoing 408 to 409, the base station can determine whether the RRC configuration information is stored in the UE; and if it is determined that the RRC configuration information is stored in the UE, the simplified RRC process may be used to establish an RRC connection for the UE.

Optionally, this embodiment further provides an optional solution, which is specifically as follows:
S1: The base station adds a non-contention dedicated preamble to the RRC connection release message sent to the UE.
S2: The UE stores RRC configuration information used for establishing a current RRC connection, and selects the non-contention dedicated preamble to access the base station.
S3: If the base station determines that a preamble sent by the UE is the non-contention dedicated preamble, it is determined that the RRC configuration information of the UE is stored in the base station, and the base station establishes an RRC connection for the UE according to the RRC configuration information of the UE, and sends the first RRC connection setup message to the UE.

410: The UE receives the first RRC connection setup message, establishes an RRC connection according to the stored RRC configuration information of the UE, and returns an RRC connection setup complete message to the base station.

The method provided in this embodiment of the present invention may be applied to an LTE communications system. It should be emphasized that, with some adaptive modifications, the specific implementation manner provided in this embodiment can be applied to other communications systems, such as a UMTS (Universal Mobile Telecommunications System, Universal Mobile Telecommunications System), to establish an RRC connection.

In the method for establishing an RRC connection provided in this embodiment of the present invention, when determining that a UE needs to establish an RRC connection, a base station can establish an RRC connection by using acquired RRC configuration information, without a need of performing reconfiguration or transmitting the RRC configuration information by using RRC signaling. Compared with the prior art, by using the method provided in this embodiment of the present invention, in a process of establishing an RRC connection, it is unnecessary to configure the RRC configuration information or transmit the RRC configuration information by using the RRC signaling; therefore, transmission of the RRC signaling can be reduced, fewer physical layer scheduling resource granularities are occupied, and utilization of physical layer resources is improved.

### Embodiment 4

Based on the embodiments shown in FIG. 2 and FIG. 3, this embodiment of the present invention further provides a method for establishing an RRC connection. In this embodiment, a base station and a UE store an RRC configuration index table in advance, where the RRC configuration index table includes at least one RRC configuration scheme, determine an RRC configuration scheme of the UE from the stored RRC configuration index table according to a moving speed of the UE and/or a service requirement of the UE, and acquire RRC configuration information of the UE according to the RRC configuration scheme of the UE.

For ease of understanding, this embodiment provides an RRC configuration index table for reference, which is specifically shown in Table 1:
**RRC configuration index table**

**Table 1**

| UE speed | Low | Low | Low | Low | Medium | Medium | Medium | Medium | High |
|---|---|---|---|---|---|---|---|---|---|
| Delay requirement | Low | Low | High | High | Low | Low | High | High | NULL |
| Packet loss rate requirement | Low | High | Low | High | Low | High | Low | High | NULL |
| Configuration index | 1 | 2 | 3 | 4 | 5 | 6 | 7 | 8 | 9 |

As shown in Table 1, the RRC configuration index table stores nine RRC configuration schemes in advance, and each value of the Configuration Index is corresponding to one RRC configuration scheme. It should be noted that, Table 1 is merely a schematic table. In an actual application, the UE speed, the delay requirement, and the packet loss rate requirement may be classified according to specific numerical values, so as to determine a corresponding configuration Index value.

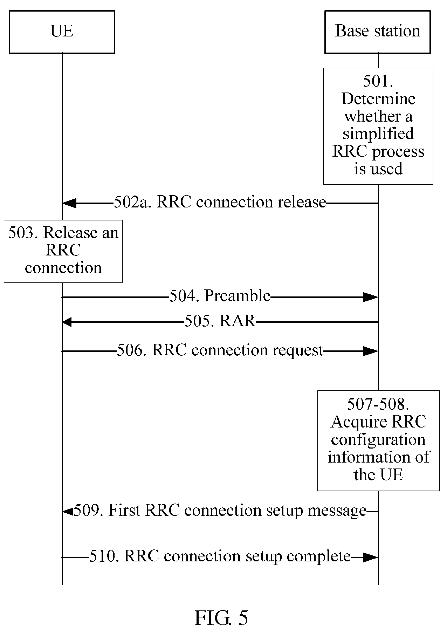

Next, the method for establishing an RRC connection provided in this embodiment is specifically described. As shown in FIG. 5, the method includes:
501: When a UE needs to switch from an RRC connected mode to an RRC idle mode, a base station determines whether a simplified RRC process is used when the UE establishes a next RRC connection; if yes, perform 502a; or if not, perform 502b.

Specifically, when the base station determines whether the simplified RRC process is used when the UE establishes a next RRC connection, the following methods may be used, but the method is not limited to the following ones:
(1) when a bearer type of the UE remains unchanged in a set period of time, determining that the simplified RRC process is used when the UE establishes a next RRC connection; or
(2) when a time when the UE camps on a current cell is longer than a set period of time, determining that the simplified RRC process is used when the UE establishes a next RRC connection; or
(3) when a moving speed of the UE is less than or equal to a set value, determining that the simplified RRC process is used when the UE establishes a next RRC connection; or
(4) when load of a cell in which the UE is located is less than a set value, determining that the simplified RRC process is used when the UE establishes a next RRC connection.

The simplified RRC process refers to that the UE and the base station establish an RRC connection by using acquired RRC configuration information. In this embodiment, the base station and the UE may acquire the RRC configuration information of the UE according to an RRC configuration scheme in the RRC configuration index table. Specific implementation is as follows:
502a: The base station sends an RRC connection release message to the UE, where the RRC connection release message carries an indication flag, the RRC connection release message is used to instruct the UE to release a current RRC connection, and the indication flag is used to indicate that the simplified RRC process is used when the UE requests to re-establish an RRC connection.

As an optional solution, the base station may further add a non-contention dedicated preamble to the RRC connection release message, where the non-contention dedicated preamble is used to indicate that the simplified RRC process is used when the UE requests to re-establish an RRC connection.

502b: The base station establishes an RRC connection for the UE according to the method shown in FIG. 1.

503: The UE receives the RRC connection release message, and releases the current RRC connection.

504: When the UE needs to re-establish an RRC connection, the UE randomly selects a preamble, sends the preamble to the base station, and initiates contention access to the base station.

505: The base station parses the preamble sent by the UE, and sends an RAR to the UE.

It should be noted that, the foregoing 504 to 505 describe an access process in which the UE accesses the base station in a contention manner. It should be emphasized that, if in step 502a, the RRC connection release message carries a non-contention dedicated preamble, the UE may initiate non-contention access to the base station according to the non-contention dedicated preamble.

506: The UE receives the RAR, and sends an RRC connection request message to the base station by using the RAR, where the RRC connection request message carries first index information, and the first index information is corresponding to an RRC configuration scheme in the RRC configuration index table.

For example, according to the RRC configuration index table in Table 1, if a current moving speed of the UE is "low", and the delay requirement and packet loss rate requirement of a service that needs to be executed are also "low", the first index information determined by the UE is "Index value = 1".

507: The base station receives the RRC connection request message sent by the UE, and acquires the first index information from the RRC connection request message.

508: The base station determines, in the RRC configuration index table, the RRC configuration scheme corresponding to the first index information, and acquires RRC configuration information of the UE according to the RRC configuration scheme corresponding to the first index information.

509: The base station sends a first RRC connection setup message to the UE, where the first RRC connection setup message includes second index information, where the second index information is used to instruct the UE to determine, in the RRC configuration index table, an RRC configuration scheme corresponding to the second index information, acquire the RRC configuration information of the UE according to the RRC configuration scheme, and establish an RRC connection by using the RRC configuration information.

Specifically, the second index information may be added by modifying an information element of an initial RRC connection setup message. For example, the first RRC connection setup message may include the following content:

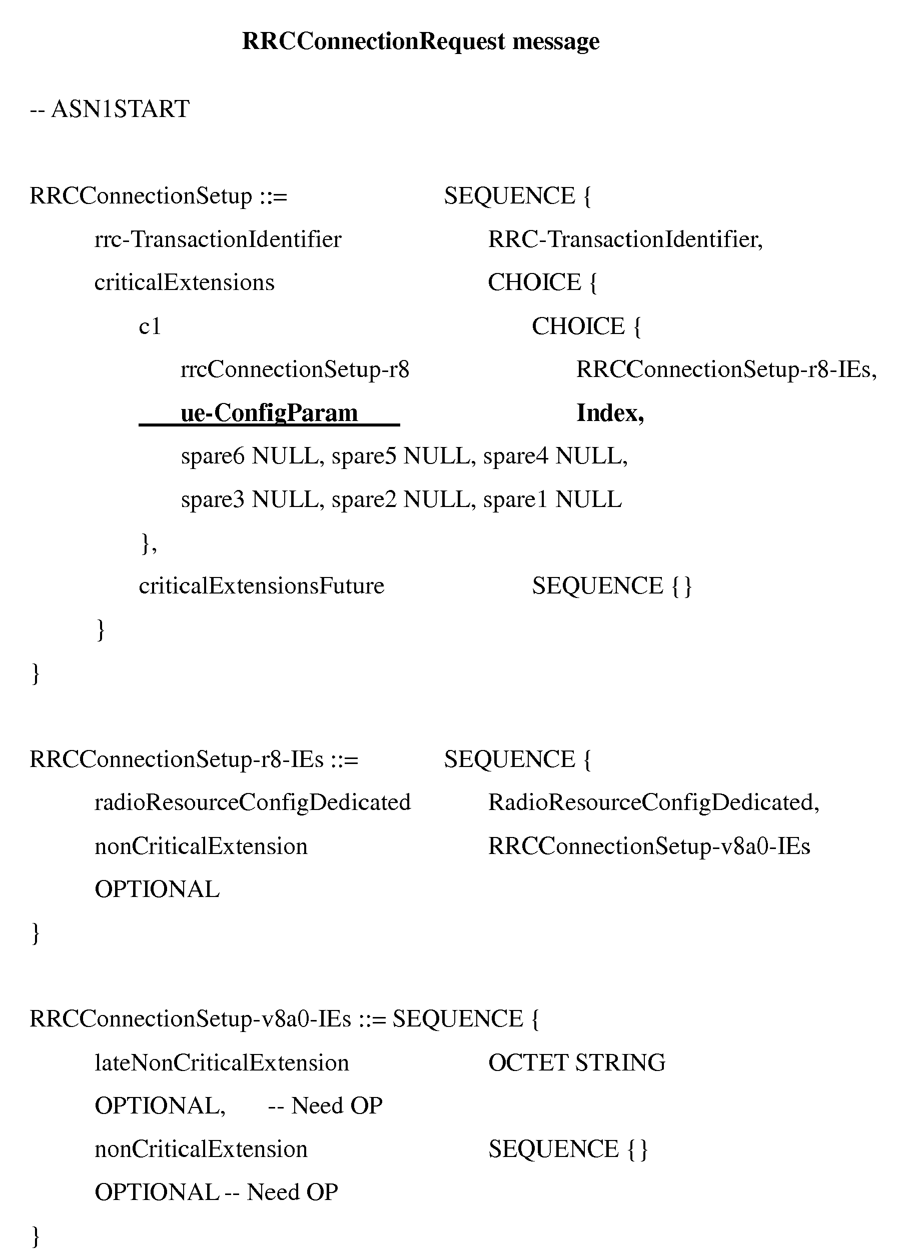

"ue-ConfigParam" is a newly added item, and is used to carry the second index information (that is, the index value).

510: The UE receives the RRC connection setup message, acquires the second index information, determines, according to the second index information, a corresponding RRC configuration scheme in the RRC configuration index table, acquires the RRC configuration information of the UE according to the RRC configuration scheme, and establishes an RRC connection according to the RRC configuration information of the UE; and after the RRC connection is established, the UE returns an RRC connection setup complete message to the base station.

The method provided in this embodiment of the present invention may be applied to an LTE communications system. It should be emphasized that, with some adaptive modifications, the specific implementation manner provided in this embodiment can be applied to other communications systems, such as a UMTS, to establish an RRC connection.

In the method for establishing an RRC connection provided in this embodiment of the present invention, a UE and a base station store an RRC configuration index table; and when the UE needs to establish an RRC connection, the UE and the base station may acquire RRC configuration information of the UE from the RRC configuration index table, and do not need to transmit the RRC configuration information by using RRC signaling. Compared with the prior art, by using the method provided in this embodiment of the present invention, in a process of establishing an RRC connection, the base station does not need to configure the RRC configuration information, and the RRC configuration information does not need to be transmitted between the UE and base station by using the RRC signaling; therefore, transmission of the RRC signaling can be reduced, fewer physical layer scheduling resource granularities are occupied, and utilization of physical layer resources is improved.

### Embodiment 5

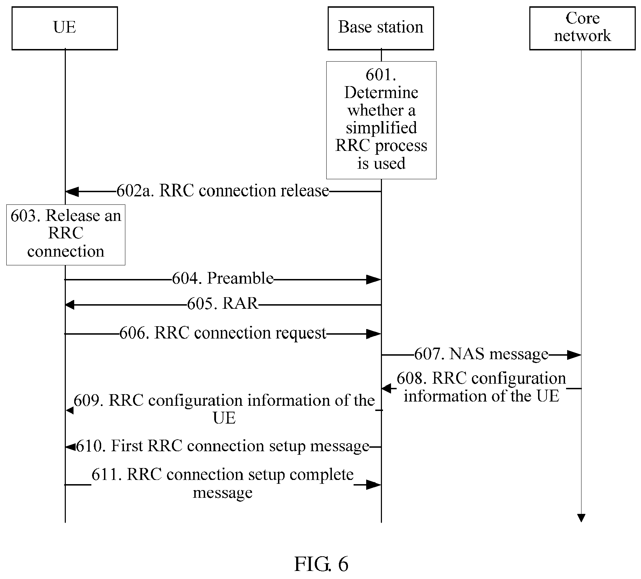

Based on the embodiments shown in FIG. 2 and FIG. 3, this embodiment of the present invention further provides a method for establishing an RRC connection. As shown in FIG. 6, the method includes:
601: When a UE needs to switch from an RRC connected mode to an RRC idle mode, a base station determines whether a simplified RRC process is used when the UE establishes a next RRC connection; if yes, perform 602a; or if not, perform 602b. The simplified RRC process refers to that the UE and the base station establish an RRC connection by using existing RRC configuration information.

Specifically, when the base station determines whether the simplified RRC process is used when the UE establishes a next RRC connection, the following methods may be used, but the method is not limited to the following ones:
(1) when a bearer type of the UE remains unchanged in a set period of time, determining that the simplified RRC process is used when the UE establishes a next RRC connection; or
(2) when a time when the UE camps on a current cell is longer than a set period of time, determining that the simplified RRC process is used when the UE establishes a next RRC connection; or
(3) when a moving speed of the UE is less than or equal to a set value, determining that the simplified RRC process is used when the UE establishes a next RRC connection; or
(4) when load of a cell in which the UE is located is less than a set value, determining that the simplified RRC process is used when the UE establishes a next RRC connection.

602a: The base station sends an RRC connection release message to the UE, where the RRC connection release message carries an indication flag, the RRC connection release message is used to instruct the UE to release a current RRC connection, and the indication flag is used to indicate that the simplified RRC process is used when the UE requests to re-establish an RRC connection.

602b: The base station establishes an RRC connection for the UE according to the method shown in FIG. 1.

603: The UE receives the RRC connection release message, and releases the current RRC connection.

604: When the UE needs to re-establish an RRC connection, the UE randomly selects a preamble, and initiates contention access to the base station.

Optionally, to make the UE access the base station rapidly, the RRC connection release message sent to the UE may carry a non-contention dedicated preamble; in this case, the UE may select the non-contention dedicated preamble to access the base station.

As an optional solution, the non-contention dedicated preamble may be used to indicate that the simplified RRC process is used when the UE requests to re-establish an RRC connection.

605: The base station parses the preamble sent by the UE, and sends an RAR to the UE.

606. The UE receives the RAR, and sends an RRC connection request message to the base station by using the RAR, where the RRC connection request message includes a unique identifier of the UE, a TMSI, and an NAS message of the UE.

To carry the NAS message, an IE of the RRC connection request message may be modified. The modified IE of the RRC connection request message includes the following content:

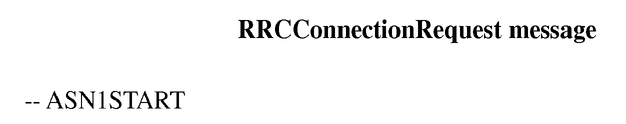

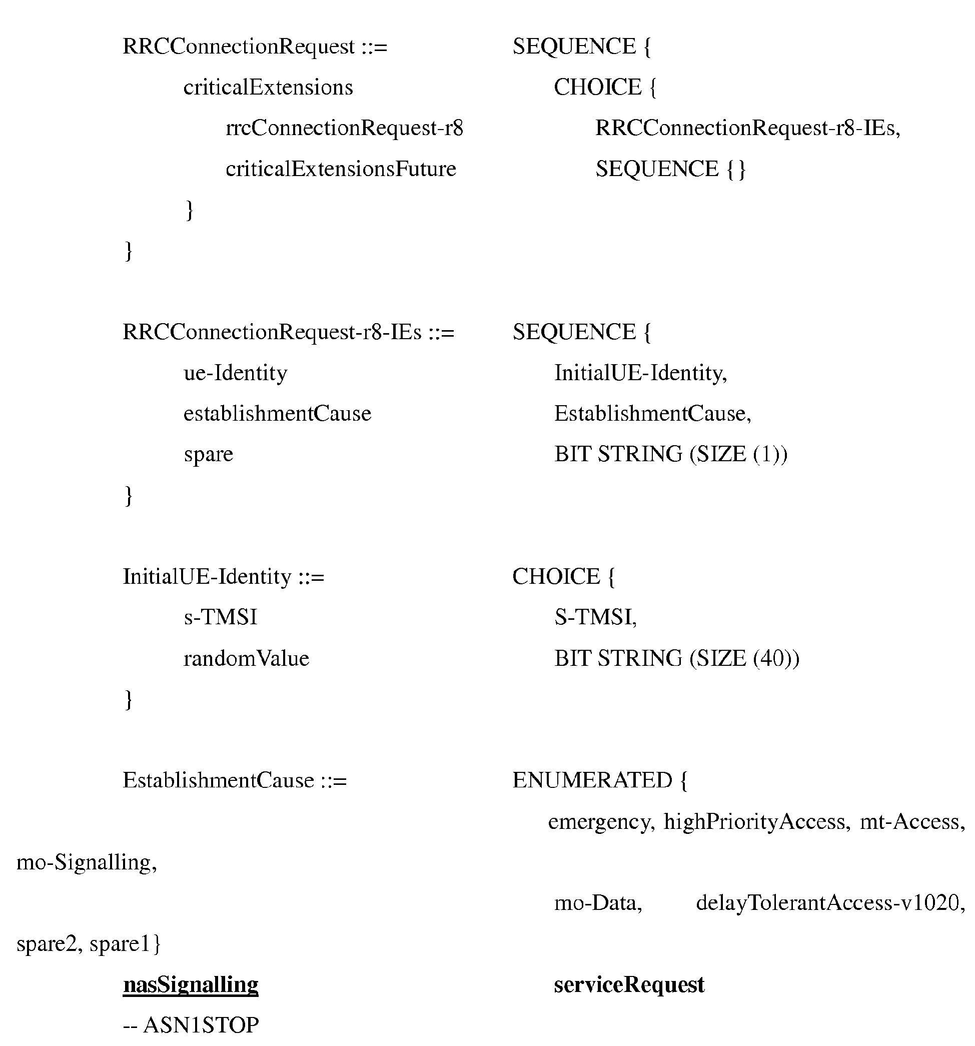

"nasSignalling" is a newly added NAS message, and needs to be reported by the base station to a core network device; the core network device determines RRC configuration information of the UE according to the NAS message, and returns the RRC configuration information of the UE to the base station.

607: The base station receives the RRC connection request message, reports the NAS message in the RRC connection request message to a core network device, so that the core network device determines RRC configuration information of the UE according to the NAS message, and returns the RRC configuration information of the UE to the base station.

608: The core network device returns the RRC configuration information of the UE to the base station.

609: The base station acquires the RRC configuration information of the UE from the core network device, and forwards the RRC configuration information of the UE to the UE.

610: The base station establishes an RRC connection for the UE according to the RRC configuration information of the UE, and sends a first RRC connection setup message to the UE, to instruct the UE to establish an RRC connection according to the RRC configuration information of the UE.

611: The UE receives the first RRC connection setup message, establishes an RRC connection according to the RRC configuration information of the UE, and after the RRC connection is established, returns an RRC connection setup complete message to the base station.

The first RRC connection setup message carries an RRC connection reconfiguration message and an RRC security mode signaling message; therefore, the RRC connection setup message, the RRC connection reconfiguration message and the RRC security mode signaling message can be sent to the UE by using one physical layer scheduling resource granularity, and a relatively small quantity of physical layer scheduling resource granularities is occupied; moreover, an acknowledgment message (that is, an RRC connection setup complete message) corresponding to the RRC connection setup message, an acknowledgment message (that is, an RRC connection reconfiguration complete message) corresponding to the RRC connection reconfiguration message, and an acknowledgment message (that is, RRC security mode signaling) corresponding to the RRC security mode signaling message may also be set to the base station by using one physical layer scheduling resource granularity. In this way, scheduling resources occupied by RRC signaling in a process of establishing an RRC connection can be effectively reduced, and the resource utilization is improved.

The method provided in this embodiment of the present invention may be applied to an LTE communications system. It should be emphasized that, with some adaptive modifications, the specific implementation manner provided in this embodiment can be applied to other communications systems, such as a UMTS, to establish an RRC connection.

According to the method for establishing an RRC connection provided in this embodiment of the present invention, when an RRC connection needs to be established, a UE and a base station can establish RRC according to RRC configuration information of the UE configured by a core network device, and do not need to transmit the RRC configuration information by using RRC signaling. Compared with the prior art, by using the method provided in this embodiment of the present invention, in a process of establishing an RRC connection, the base station does not need to configure the RRC configuration information, and the UE and the base station do not need to transmit the RRC configuration information by using the RRC signaling; therefore, transmission of the RRC signaling can be reduced, fewer physical layer scheduling resource granularities are occupied, and utilization of physical layer resources is improved.

### Embodiment 6

This embodiment of the present invention provides an apparatus for establishing an RRC connection, which can implement the methods for establishing an RRC connection shown in FIG. 2, FIG. 4, FIG. 5, and FIG. 6.

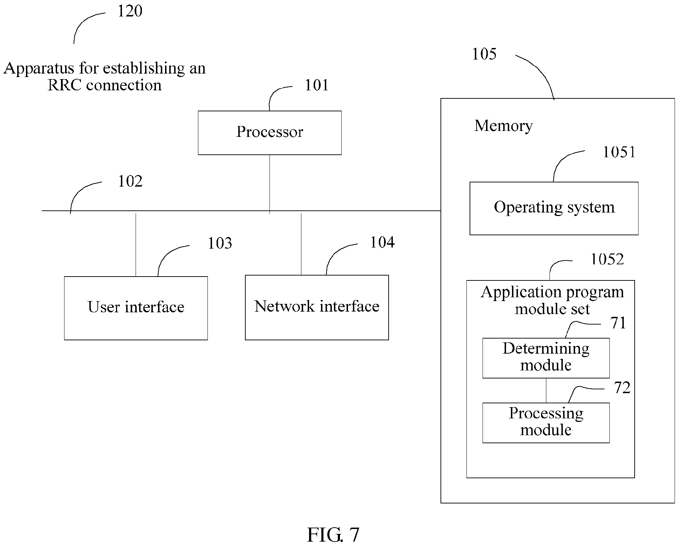

This embodiment of the present invention provides a schematic structural diagram of an apparatus for establishing an RRC connection. As shown in FIG. 7, the apparatus includes:
at least one processor 101, for example, a CPU;
at least one network interface 104 or another user interface 103;
a memory 105, where the memory 105 may include a high-speed RAM memory, and may further include a non-volatile memory (non-volatile memory), for example, at least one magnetic disk storage; and optionally, the memory 105 may include at least one storage apparatus located away from the foregoing processor 101; and
at least one communications bus 102, where the communications bus 102 is configured to implement connection and communication among these components.

Optionally, the apparatus further includes the user interface 103, including a display, a keyboard or a click device (for example, a mouse, a trackball (trackball), a touch-sensitive panel, or a touch display screen).

In some implementation manners, the memory 105 stores the following elements:
executable modules or data structures, or a subset thereof, or an extended set thereof;
an operating system 1051, including various system programs, used to implement various fundamental services and process hardware-based tasks; and
an application program module set 1052, including various application programs, configured to implement various application services.

To implement the method shown in FIG. 3, as shown in FIG. 7, the application program module set 1052 includes, but is not limited to:
a determining module 71, configured to determine that user equipment UE needs to switch from an RRC connected mode to an RRC idle mode, and determine that a simplified RRC process is used when the UE establishes a next RRC connection, where the simplified RRC process refers to establishing an RRC connection by using acquired RRC configuration information of the UE; and
a processing module 72, configured to: when the UE requests to establish a next RRC connection, establish an RRC connection for the UE by using the simplified RRC process.

The determining module 71 is specifically configured to determine that a bearer type of the UE remains unchanged in a set period of time, to determine that the simplified RRC process is used when the UE establishes a next RRC connection;
or
the determining module 71 is specifically configured to determine that a time when the UE camps on a current cell is longer than a set period of time, to determine that the simplified RRC process is used when the UE establishes a next RRC connection;
or
the determining module 71 is specifically configured to determine that a moving speed of the UE is less than or equal to a set value, to determine that the simplified RRC process is used when the UE establishes a next RRC connection;
or
the determining module 71 is specifically configured to determine that load of a cell in which the UE is located is less than a set value, to determine that the simplified RRC process is used when the UE establishes a next RRC connection.

For ease of understanding, this embodiment provides a typical case for reference: When service characteristics of services requested by the UE in a period of time are the same or similar, or when the UE continuously camps on the current cell in a period of time, if the UE needs to re-establish an RRC connection, the base station may establish a new RRC connection between the UE and the base station by using the apparatus for establishing an RRC connection shown in FIG. 7 and according to RRC configuration information used when a previous RRC connection is established, and reconfiguration is not needed. For example, in a possible actual application scenario, the UE requests to run a web page browsing service, and the base station and the UE establish a first RRC connection; after the UE cuts off the first RRC connection, if the UE requests to run the web page browsing service again, the base station and the UE may establish a second RRC connection by directly using the RRC configuration information that is used for establishing the first RRC connection.

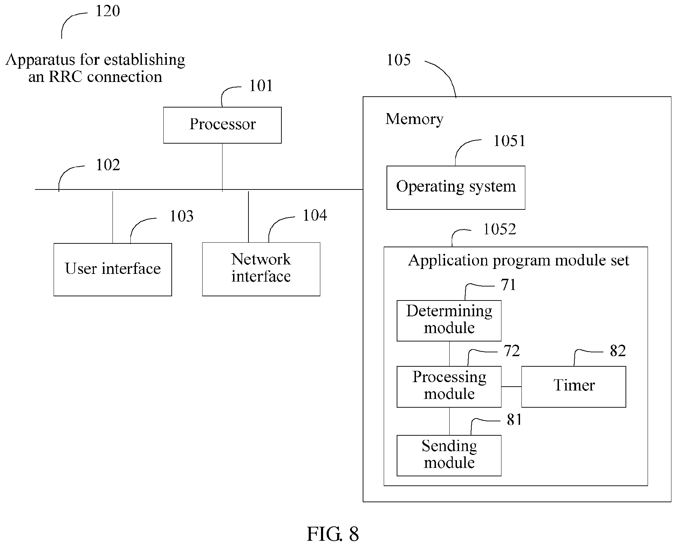

Based on the apparatus shown in FIG. 7, to implement the method for establishing an RRC connection shown in FIG. 4, further, as shown in FIG. 8, the application program module set 1052 further includes:
a sending module 81, configured to send an RRC connection release message to the UE, where the RRC connection release message carries a first indication message, and the first indication message is used to instruct the UE to store RRC configuration information used for establishing a current RRC connection, where
the processing module 72 is specifically configured to acquire RRC configuration information of the UE, establish, in response to a received RRC connection request message sent by the UE, an RRC connection for the UE according to the RRC configuration information of the UE, and send a first RRC connection setup message to the UE, where the first RRC connection setup message is used to instruct the UE to establish an RRC connection by using the stored RRC configuration information.

The processing module 72 is configured to store a context context of the UE, and acquire the RRC configuration information of the UE from the context of the UE;
or
the processing module 72 is configured to store an RRC configuration parameter of the UE and an identifier of the UE that are used when the UE establishes a previous RRC connection, where the RRC configuration parameter of the UE and the identifier of the UE are the RRC configuration information of the UE.

As shown in FIG. 8, the application program module set 1052 further includes:
a first timer 82, configured to start timing when it is determined that the UE switches to the RRC idle mode, where
the processing module 72 is configured to: when it is determined that the first timer times out, delete the stored context context of the UE; or
the processing module 72 is further configured to: when it is determined that the first timer times out, delete the stored RRC configuration parameter of the UE and the stored identifier of the UE.

Specifically, the processing module 72 is configured to receive the RRC connection request message sent by the UE, where the RRC connection request message includes a second indication message, the second indication message is used to indicate whether the RRC configuration information is stored in the UE; acquire the second indication message from the RRC connection request message, and determine, according to the second indication message, that the RRC configuration information is stored in the UE; and establish an RRC connection for the UE according to the RRC configuration information of the UE, and send a first RRC connection setup message to the UE, to instruct the UE to establish an RRC connection according to the RRC configuration information stored by the UE.

Specifically, the sending module 81 is further configured to add a non-contention dedicated preamble preamble to the RRC connection release message; and
the processing module 72 is configured to determine that a preamble sent by the UE is the non-contention dedicated preamble, to determine that the RRC configuration information is stored in the UE, establish an RRC connection for the UE according to the RRC configuration information of the UE, and send the first RRC connection setup message to the UE.

The first RRC connection setup message sent by the processing module carries an RRC connection reconfiguration message and an RRC security mode signaling message.

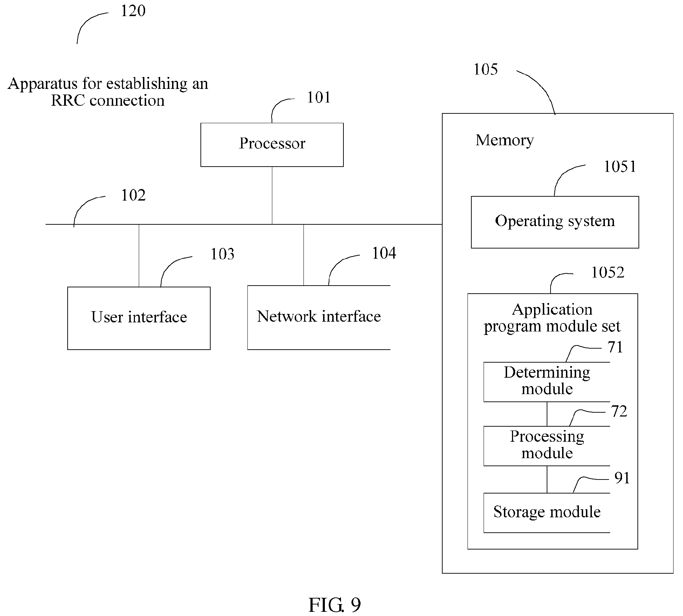

Based on the apparatus shown in FIG. 7, to implement the method for establishing an RRC connection shown in FIG. 5, further, as shown in FIG. 9, the application program module set 1052 further includes:
a storage module 91, configured to store an RRC configuration index table, where the RRC configuration index table includes at least one RRC configuration scheme, determine an RRC configuration scheme of the UE from the stored RRC configuration index table according to a moving speed of the UE and/or a service requirement of the UE, and acquire RRC configuration information of the UE according to the RRC configuration scheme of the UE.

Specifically, the processing module 72 is configured to receive an RRC connection request message sent by the UE, where the RRC connection request message sent by the UE includes first index information, and the first index information is corresponding to an RRC configuration scheme in the RRC configuration index table; and determine, in the RRC configuration index table stored by the storage module 91, the RRC configuration scheme corresponding to the first index information, acquire the RRC configuration information of the UE according to the RRC configuration scheme corresponding to the first index information, establish an RRC connection for the UE according to the RRC configuration information of the UE, and send a first RRC connection setup message to the UE.

The first RRC connection setup message sent by the processing module 72 includes second index information, the second index information is corresponding to an RRC configuration scheme in the RRC configuration index table stored by the UE, and the second index information is used to instruct the UE to determine, in the RRC configuration index table, the RRC configuration scheme corresponding to the second index information; and
the processing module 72 is configured to acquire the RRC configuration information of the UE according to the RRC configuration scheme, and establish an RRC connection by using the RRC configuration information.

Based on the apparatus shown in FIG. 7, to implement the method for establishing an RRC connection shown in FIG. 6, further, the processing module 72 is further configured to receive an RRC connection request message sent by the UE, where the RRC connection request message carries a non-access stratum NAS message, and the NAS message is used to request the RRC configuration information of the UE from the core network device;
the processing module 72 is further configured to send the NAS message to the core network device, so that the core network device determines the RRC configuration information of the UE according to the NAS message, and returns the RRC configuration information of the UE to the processing module 72; and
the processing module 72 is further configured to send a first RRC connection setup message to the UE, and establish an RRC connection to the UE according to the RRC configuration information of the UE, where the first RRC connection setup message carries an RRC connection reconfiguration message and an RRC security mode signaling message.

The apparatus for establishing an RRC connection provided in this embodiment of the present invention may be applied to an LTE communications system. It should be emphasized that, with some adaptive modifications, the specific implementation manner provided in this embodiment can be applied to other communications systems, such as a UMTS, to establish an RRC connection.

According to the apparatus for establishing an RRC connection provided in this embodiment of the present invention, when an RRC connection needs to be established, a UE and a base station can establish RRC by using existing RRC configuration information, without a need of reconfiguring an RRC parameter. Compared with the prior art, by using the apparatus provided in this embodiment of the present invention, in a process of establishing an RRC connection, it is unnecessary to reconfigure RRC configuration information; therefore, transmission of RRC signaling can be reduced, fewer physical layer scheduling resource granularities are occupied, and utilization of physical layer resources is improved.

### Embodiment 7

This embodiment of the present invention provides an apparatus for establishing an RRC connection, which can implement the methods for establishing an RRC connection shown in FIG. 3, FIG. 4, FIG. 5, and FIG. 6.

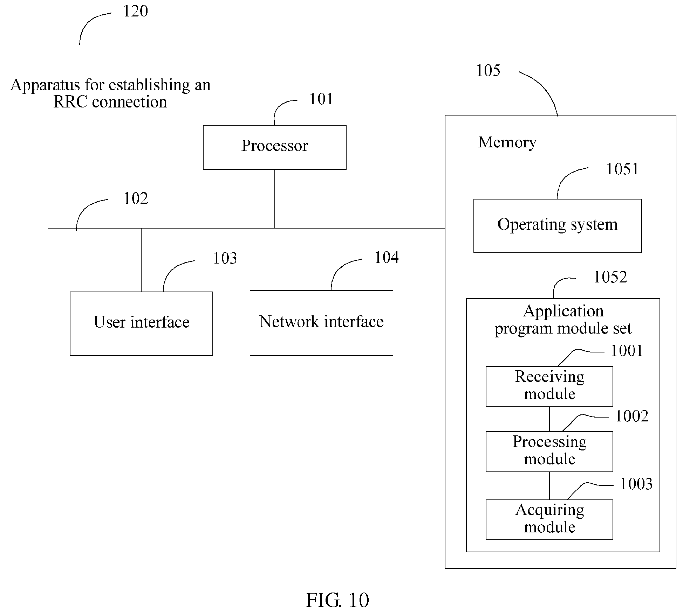

This embodiment of the present invention provides a schematic structural diagram of an apparatus for establishing an RRC connection. As shown in FIG. 10, the apparatus includes:
at least one processor 101, for example, a CPU;
at least one network interface 104 or another user interface 103;
a memory 105, where the memory 105 may include a high-speed RAM memory, and may further include a non-volatile memory (non-volatile memory), for example, at least one magnetic disk storage; and optionally, the memory 105 may include at least one storage apparatus located away from the foregoing processor 101; and
at least one communications bus 102, where the communications bus 102 is configured to implement connection and communication among these components.

Optionally, the apparatus further includes the user interface 103, including a display, a keyboard or a click device (for example, a mouse, a trackball (trackball), a touch-sensitive panel, or a touch display screen).

In some implementation manners, the memory 105 stores the following elements:
executable modules or data structures, or a subset thereof, or an extended set thereof;
an operating system 1051, including various system programs, used to implement various fundamental services and process hardware-based tasks; and
an application program module set 1052, including various application programs, configured to implement various application services.

To implement the method shown in FIG. 3, as shown in FIG. 10, the application program module set 1052 includes, but is not limited to:
a receiving module 1001, configured to receive a first RRC connection setup message sent by a base station, where the first RRC connection setup message is used to instruct the UE to establish an RRC connection by using a simplified RRC process, where the simplified RRC process refers to establishing an RRC connection by using acquired RRC configuration information of the UE; and
a processing module 1002, configured to establish an RRC connection by using the simplified RRC process.

Further, as shown in FIG. 10, the application program module set 1052 further includes:
an acquiring module 1003, configured to acquire RRC configuration information of the UE.

For ease of understanding, this embodiment provides a typical case for reference: When service characteristics of services requested by the UE in a period of time are the same or similar, or when the UE continuously camps on a current cell in a period of time, if the UE needs to re-establish an RRC connection, the UE may establish a new RRC connection between the UE and the base station according to RRC configuration information used when a previous RRC connection is established, so that in a process of establishing an RRC connection, the UE does not need to acquire the RRC configuration information by receiving RRC signaling sent by the base station, which can reduce transmission of RRC signaling. In a possible actual application scenario, for example, the UE requests to run a web page browsing service, and the base station and the UE establish a first RRC connection; after the UE cuts off the first RRC connection, if the UE requests to run the web page browsing service again, the UE and the base station may establish a second RRC connection by directly using the RRC configuration information that is used for establishing the first RRC connection.

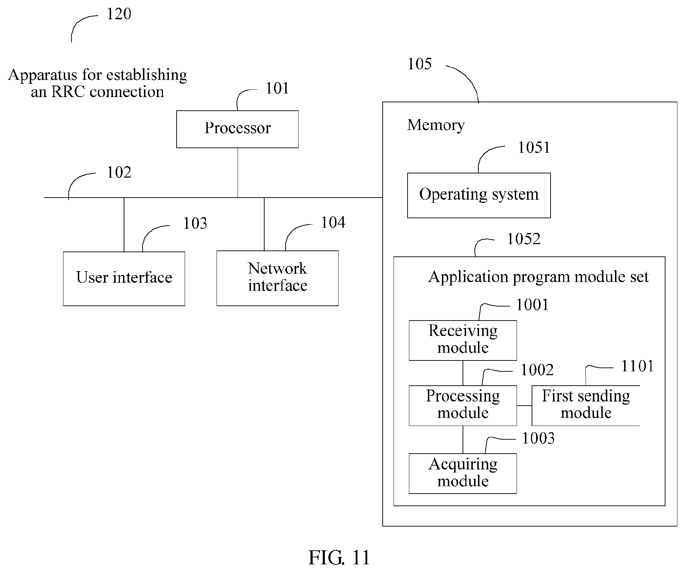

Based on the apparatus shown in FIG. 10, to implement the method for establishing an RRC connection shown in FIG. 4, further, as shown in FIG. 11, the application program module set 1052 further includes:
a first sending module 1101, configured to determine that switching from an RRC connected mode to an RRC idle mode is needed, and send an RRC connection release request message to the base station, where
the receiving module 1001 is further configured to receive an RRC connection release message that is sent by the base station according to the RRC connection release request message, where the RRC connection release message is used to instruct the UE to switch to the RRC idle mode, the RRC connection release message carries a first indication message, and the first indication message is used to instruct the UE to store RRC configuration information used for establishing a current RRC connection.

The acquiring module 1003 is specifically configured to: in response to the first indication message in the RRC connection release message received by the receiving module 1001, store the RRC configuration information used for establishing the current RRC connection, where the RRC configuration information used for establishing the current RRC connection is the RRC configuration information of the UE.

The first sending module 1101 is configured to determine that switching from the RRC idle mode to the RRC connected mode is needed, and send an RRC connection request message to the base station, where the RRC connection request message includes a second indication message, and the second indication message is used to indicate that the RRC configuration information is stored in the UE.

The RRC connection release message received by the receiving module 1001 carries a non-contention dedicated preamble preamble; and
the first sending module 1101 is configured to send the non-contention dedicated preamble to the base station, so as to access the base station, where the non-contention dedicated preamble is used to indicate that the RRC configuration information is stored in the UE.

The first RRC connection setup message received by the receiving module 1001 is used to instruct the UE to establish an RRC connection according to the RRC configuration information stored by the acquiring module; and
the processing module 1002 is configured to establish, in response to the first RRC connection setup message received by the receiving module 1001, an RRC connection according to the RRC configuration information stored by the acquiring module 1003.

The first RRC connection setup message received by the receiving module 1001 carries an RRC connection reconfiguration message and an RRC security mode signaling message.

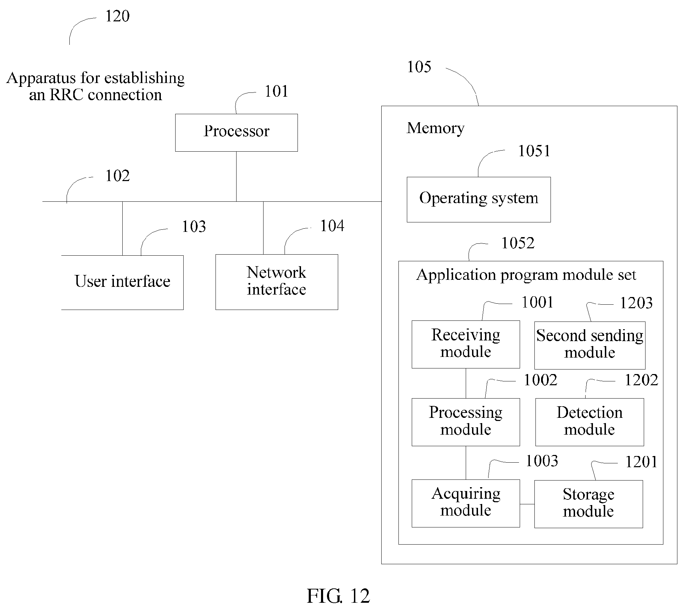

Based on the apparatus shown in FIG. 10, to implement the method for establishing an RRC connection shown in FIG. 5, further, as shown in FIG. 12, the application program module set 1052 further includes:
a storage module 1201, configured to store an RRC configuration index table, where the RRC configuration index table includes at least one RRC configuration scheme, determine an RRC configuration scheme of the UE from the stored RRC configuration index table according to a moving speed of the UE and/or a service requirement of the UE, and acquire RRC configuration information of the UE according to the RRC configuration scheme of the UE.

As shown in FIG. 12, the application program module set 1052 further includes:
a detection module 1202, configured to detect a current moving speed of the UE and/or a current service requirement of the UE, and determine first index information, where the first index information is corresponding to an RRC configuration scheme in the RRC configuration index table; and
a second sending module 1203, configured to send an RRC connection request message to the base station, where the RRC connection request message includes the first index information determined by the detection module 1202, the first index information is used to instruct the base station to determine the RRC configuration information of the UE, and the RRC configuration index table is stored in the base station.

The first RRC connection setup message received by the receiving module 1001 includes second index information, the second index information is corresponding to an RRC configuration scheme in the RRC configuration index table, and the second index information is used to instruct the processing module 1002 to determine an RRC configuration scheme in the RRC configuration index table stored by the storage module 1201 and establish an RRC connection by using the determined RRC configuration scheme.

The acquiring module 1003 is configured to determine, in the configuration index table stored by the storage module 1201, the RRC configuration scheme corresponding to the second index information, and acquire the RRC configuration information of the UE according to the RRC configuration scheme.

The processing module 1002 is configured to establish an RRC connection according to the RRC configuration information of the UE acquired by the acquiring module 1003.

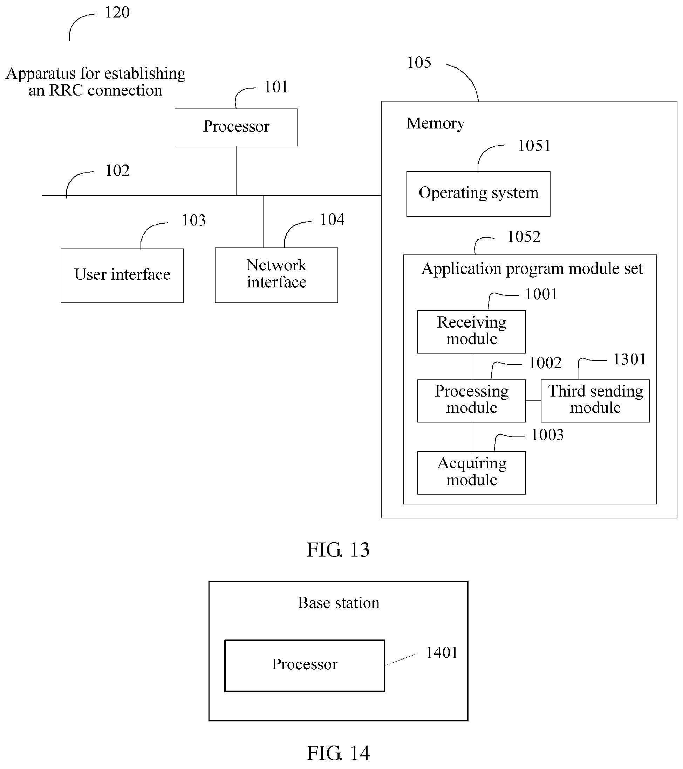

Based on the apparatus shown in FIG. 10, to implement the method for establishing an RRC connection shown in FIG. 6, further, as shown in FIG. 13, the application program module set 1052 further includes:
a third sending module 1301, configured to send an RRC connection request message to the base station, where the RRC connection request information carries a non-access stratum NAS message, and the NAS message needs to be reported by the base station to a core network device, so that the core network device determines the RRC configuration information of the UE, and returns the RRC configuration information of the UE to the base station.

The acquiring module 1003 is configured to receive the RRC configuration information of the UE that is determined by the core network device and forwarded by the base station; and
the processing module 1002 is configured to establish an RRC connection according to the RRC configuration information of the UE acquired by the acquiring module 1003;
where the first RRC connection setup message received by the receiving module 1001 carries an RRC connection reconfiguration message and an RRC security mode signaling message.

The apparatus for establishing an RRC connection provided in this embodiment of the present invention may be applied to an LTE communications system. It should be emphasized that, with some adaptive modifications, the specific implementation manner provided in this embodiment can be applied to other communications systems, such as a UMTS, to establish an RRC connection.

According to the apparatus for establishing an RRC connection provided in this embodiment of the present invention, when an RRC connection needs to be established, a UE may establish RRC according to an indication of a base station by using existing RRC configuration information, and does not need to acquire RRC configuration information from the base station again. Compared with the prior art, by using the apparatus provided in this embodiment of the present invention, in a process of establishing an RRC connection, it is unnecessary to acquire the RRC configuration information from the base station; therefore, transmission of RRC signaling can be reduced, fewer physical layer scheduling resource granularities are occupied, and utilization of physical layer resources is improved.

### Embodiment 8

This embodiment of the present invention provides a base station, which can implement a method on a base station side in the methods for establishing an RRC connection shown in FIG. 2, FIG. 4, FIG. 5, and FIG. 6.

To implement the method shown in FIG. 2, as shown in FIG. 14, the base station includes:
a processor 1401, configured to determine that user equipment UE needs to switch from an RRC connected mode to an RRC idle mode, and determine that a simplified RRC process is used when the UE establishes a next RRC connection, where the simplified RRC process refers to establishing an RRC connection by using acquired RRC configuration information of the UE, where
the processor 1401 is further configured to: when the UE requests to establish a next RRC connection, establish an RRC connection for the UE by using the simplified RRC process.

Specifically, the processor 1401 is configured to determine that a bearer type of the UE remains unchanged in a set period of time, to determine that the simplified RRC process is used when the UE establishes a next RRC connection;
or
the processor 1401 is specifically configured to determine that a time when the UE camps on a current cell is longer than a set period of time, to determine that the simplified RRC process is used when the UE establishes a next RRC connection;
or
the processor 1401 is configured to determine that a moving speed of the UE is less than or equal to a set value, to determine that the simplified RRC process is used when the UE establishes a next RRC connection;
or
the processor is specifically configured to determine that load of a cell in which the UE is located is less than a set value, to determine that the simplified RRC process is used when the UE establishes a next RRC connection.

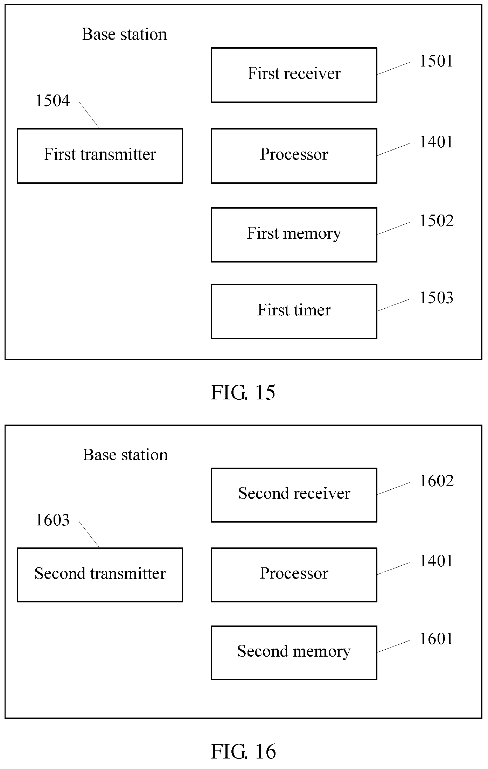

Based on the apparatus shown in FIG. 14, to implement the method for establishing an RRC connection shown in FIG. 4, further, as shown in FIG. 15, the base station further includes:
a first transmitter 1501, configured to send an RRC connection release message to the UE, where the RRC connection release message carries a first indication message, and the first indication message is used to instruct the UE to store RRC configuration information used for establishing a current RRC connection; and
the processor 1401 is specifically configured to acquire RRC configuration information of the UE, establish, in response to a received RRC connection request message sent by the UE, an RRC connection for the UE according to the RRC configuration information of the UE, and instruct the first transmitter 1501 to send a first RRC connection setup message to the UE, where the first RRC connection setup message is used to instruct the UE to establish an RRC connection by using the stored RRC configuration information.

As shown in FIG. 15, the base station further includes:
a first memory 1502, configured to store a context context of the UE, and from the context of the UE;
   or
the first memory 1502, configured to store an RRC configuration parameter of the UE and an identifier of the UE that are used when the UE establishes a previous RRC connection, where the RRC configuration parameter of the UE and the identifier of the UE are the RRC configuration information of the UE, where
the processor 1401 is configured to acquire the RRC configuration information of the UE from the context of the UE stored by the first memory 1502; or the processor 1401 is further configured to acquire the RRC configuration information of the UE according to the RRC configuration parameter of the UE and the identifier of the UE that are stored by the first memory 1502.

As shown in FIG. 15, the base station further includes:
a first timer 1503, configured to start timing when it is determined that the UE switches to the RRC idle mode, where
the first memory 1502 is configured to: when it is determined that the first timer times out, delete the stored context context of the UE; or
the first memory 1502 is configured to: when it is determined that the first timer times out, delete the stored RRC configuration parameter of the UE and the stored identifier of the UE.

As shown in FIG. 15, the base station further includes:
a first receiver 1504, configured to receive the RRC connection request message sent by the UE, where the RRC connection request message includes a second indication message, and the second indication message is used to indicate whether the RRC configuration information is stored in the UE, where
the processor 1401 is configured to acquire the second indication message from the RRC connection request message received by the first receiver 1504, determine, according to the second indication message, that the RRC configuration information is stored in the UE, establish an RRC connection for the UE according to the RRC configuration information of the UE, and instruct the first transmitter 1501 to send a first RRC connection setup message to the UE, to instruct the UE to establish an RRC connection according to the RRC configuration information stored by the UE.

The first transmitter 1501 is further configured to add a non-contention dedicated preamble preamble to the RRC connection release message; and
the processor 1401 is configured to determine that a preamble sent by the UE is the non-contention dedicated preamble, to determine that the RRC configuration information is stored in the UE, establish an RRC connection for the UE according to the RRC configuration information of the UE, and instruct the first transmitter 1501 to send the first RRC connection setup message to the UE.

In this embodiment, the first RRC connection setup message sent by the first transmitter 1501 carries an RRC connection reconfiguration message and an RRC security mode signaling message.

Based on the apparatus shown in FIG. 14, to implement the method for establishing an RRC connection shown in FIG. 5, further, as shown in FIG. 16, the base station further includes:
a second memory 1601, configured to store an RRC configuration index table, where the RRC configuration index table includes at least one RRC configuration scheme, determine an RRC configuration scheme of the UE from the stored RRC configuration index table according to a moving speed of the UE and/or a service requirement of the UE, and acquire RRC configuration information of the UE according to the RRC configuration scheme of the UE.

As shown in FIG. 16, the base station further includes:
a second receiver 1602, configured to receive an RRC connection request message sent by the UE, where the RRC connection request message sent by the UE includes first index information, and the first index information is corresponding to an RRC configuration scheme in the RRC configuration index table; and
a second transmitter 1603, configured to send a first RRC connection setup message to the UE, where
the processor 1401 is configured to determine, in the RRC configuration index table stored by the second memory 1601, the RRC configuration scheme corresponding to the first index information, acquire RRC configuration information of the UE according to the RRC configuration scheme corresponding to the first index information, establish an RRC connection for the UE according to the RRC configuration information of the UE, and instruct the second transmitter 1603 to send a first RRC connection setup message to the UE.

In this embodiment, the first RRC connection setup message sent by the second transmitter 1603 includes second index information, the second index information is corresponding to an RRC configuration scheme in the RRC configuration index table stored by the UE, and the second index information is used to instruct the UE to determine, in the RRC configuration index table, the RRC configuration scheme corresponding to the second index information; and
the processor 1401 is configured to acquire the RRC configuration information of the UE according to the RRC configuration scheme, and establish an RRC connection by using the RRC configuration information.

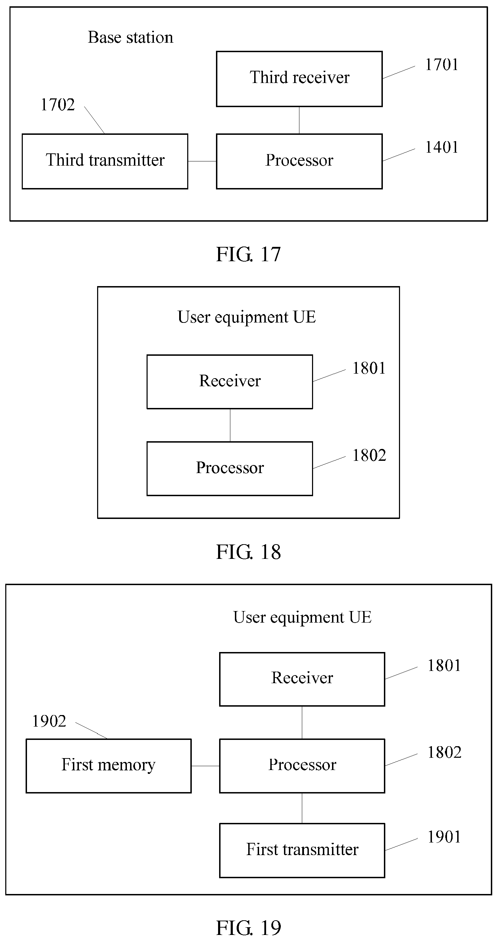

Based on the apparatus shown in FIG. 14, to implement the method for establishing an RRC connection shown in FIG. 6, further, as shown in FIG. 17, the base station further includes:
a third receiver 1701, configured to receive an RRC connection request message sent by the UE, where the RRC connection request message carries a non-access stratum NAS message, and the NAS message is used to request RRC configuration information of the UE from the core network device; and
a third transmitter 1702, configured to send the NAS message received by the third receiver 1701 to the core network device, so that the core network device determines the RRC configuration information of the UE according to the NAS message, and returns the RRC configuration information of the UE to the base station, where
the third transmitter 1702 is further configured to send a first RRC connection setup message to the UE, and establish an RRC connection to the UE according to the RRC configuration information of the UE, where the first RRC connection setup message carries an RRC connection reconfiguration message and an RRC security mode signaling message.

The base station provided in this embodiment of the present invention may be applied to an LTE communications system. It should be emphasized that, with some adaptive modifications, the base station provided in this embodiment can be applied to other communications systems, such as a UMTS, to establish an RRC connection.

According to the base station provided in this embodiment of the present invention, when an RRC connection needs to be established, a UE and the base station can establish RRC by using existing RRC configuration information, without a need of reconfiguring an RRC parameter. Compared with the prior art, by using the base station provided in this embodiment of the present invention, in a process of establishing an RRC connection, it is unnecessary to reconfigure RRC configuration information; therefore, transmission of RRC signaling can be reduced, fewer physical layer scheduling resource granularities are occupied, and utilization of physical layer resources is improved.

### Embodiment 9

This embodiment of the present invention provides user equipment UE, which can implement a method performed on a UE side in the methods for establishing an RRC connection shown in FIG. 3, FIG. 4, FIG. 5, and FIG. 6.

To implement the method shown in FIG. 3, as shown in FIG. 18, the UE includes:
a receiver 1801, configured to receive a first RRC connection setup message sent by a base station, where the first RRC connection setup message is used to instruct the UE to establish an RRC connection by using a simplified RRC process, where the simplified RRC process refers to establishing an RRC connection by using acquired RRC configuration information of the UE; and
a processor 1802, configured to establish an RRC connection by using the simplified RRC process.

Specifically, the processor 1802 is further configured to acquire RRC configuration information of the UE.

Based on the apparatus shown in FIG. 18, to implement the method for establishing an RRC connection shown in FIG. 4, further, as shown in FIG. 19, the UE further includes:
a first transmitter 1901, configured to determine that switching from an RRC connected mode to an RRC idle mode is needed, and send an RRC connection release request message to the base station, where
the receiver 1801 is further configured to receive an RRC connection release message that is sent by the base station according to the RRC connection release request message, where the RRC connection release message is used to instruct the UE to switch to the RRC idle mode, the RRC connection release message carries a first indication message, and the first indication message is used to instruct the UE to store RRC configuration information used for establishing a current RRC connection.

As shown in FIG. 19, the UE further includes:
a first memory 1902, configured to: in response to the first indication message in the RRC connection release message received by the receiver 1801, store the RRC configuration information used for establishing the current RRC connection, where
the processor 1802 is configured to determine that the RRC configuration information that is used for establishing the current RRC connection and stored by the first memory 1902 is the RRC configuration information of the UE.

In this embodiment, the first transmitter 1901 is further configured to determine that switching from the RRC idle mode to the RRC connected mode is needed, and send an RRC connection request message to the base station, where the RRC connection request message includes a second indication message, and the second indication message is used to indicate that the RRC configuration information is stored in the UE.

Specifically, the RRC connection release message received by the receiver 1801 carries a non-contention dedicated preamble preamble; and
the first transmitter 1901 is configured to send the non-contention dedicated preamble to the base station, so as to access the base station, where the non-contention dedicated preamble is used to indicate that the RRC configuration information is stored in the UE.

In this embodiment, the first RRC connection setup message received by the receiver 1801 is used to instruct the UE to establish an RRC connection according to the RRC configuration information stored by the first memory 1902; and
the processor 1802 is configured to establish, in response to the first RRC connection setup message received by the receiver 1801, an RRC connection according to the RRC configuration information stored by the first memory 1902.

In the base station shown in FIG. 19, the first RRC connection setup message received by the receiver 1801 carries an RRC connection reconfiguration message and an RRC security mode signaling message.

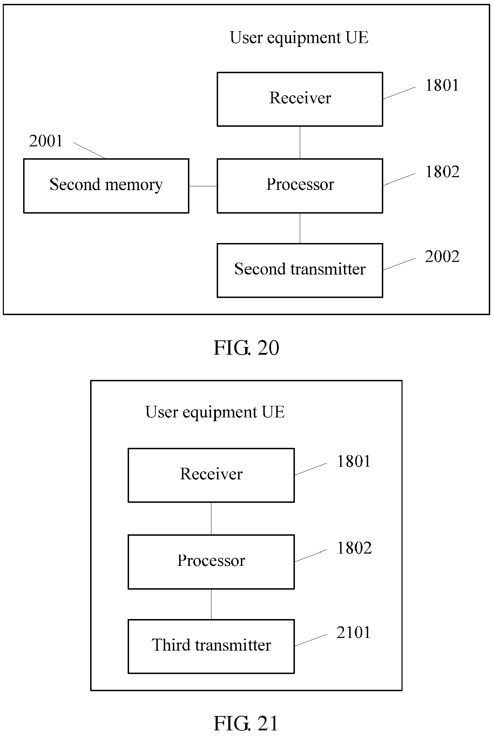

Based on the apparatus shown in FIG. 18, to implement the method for establishing an RRC connection shown in FIG. 5, further, as shown in FIG. 20, the UE further includes:
a second memory 2001, configured to store an RRC configuration index table, where the RRC configuration index table includes at least one RRC configuration scheme, determine an RRC configuration scheme of the UE from the stored RRC configuration index table according to a moving speed of the UE and/or a service requirement of the UE, and acquire RRC configuration information of the UE according to the RRC configuration scheme of the UE.

The processor 1802 is configured to detect a current moving speed of the UE and/or a current service requirement of the UE, and determine first index information, where the first index information is corresponding to an RRC configuration scheme in the RRC configuration index table; and
the UE further includes a second transmitter 2002, configured to send an RRC connection request message to the base station, where the RRC connection request message includes the first index information determined by the processor 1802, the first index information is used to instruct the base station to determine the RRC configuration information of the UE, and the RRC configuration index table is stored in the base station.

The first RRC connection setup message received by the receiver 1801 includes second index information, the second index information is corresponding to an RRC configuration scheme in the RRC configuration index table, and the second index information is used to instruct the processor 1802 to determine an RRC configuration scheme in the RRC configuration index table stored by the second memory 2001 and establish an RRC connection by using the determined RRC configuration scheme.

In this embodiment, the processor 1802 is further configured to determine, in the configuration index table stored by the second memory 2001, the RRC configuration scheme corresponding to the second index information, and acquire the RRC configuration information of the UE according to the RRC configuration scheme.

The processor 1802 is configured to establish an RRC connection according to the acquired RRC configuration information of the UE.

Based on the apparatus shown in FIG. 18, to implement the method for establishing an RRC connection shown in FIG. 6, further, as shown in FIG. 21, the UE further includes:
a third transmitter 2101, configured to send an RRC connection request message to the base station, where the RRC connection request information carries a non-access stratum NAS message, and the NAS message needs to be reported by the base station to a core network device, so that the core network device determines RRC configuration information of the UE, and returns the RRC configuration information of the UE to the base station.

The receiver 1801 is configured to receive the RRC configuration information of the UE that is determined by the core network device and forwarded by the base station; and
the processor 1802 is configured to establish an RRC connection according to the RRC configuration information of the UE received by the receiver;
where the first RRC connection setup message received by the receiver 1801 carries an RRC connection reconfiguration message and an RRC security mode signaling message.

The UE provided in this embodiment of the present invention may be applied to an LTE communications system. It should be emphasized that, with some adaptive modifications, the specific implementation manner of the UE provided in this embodiment can be applied to other communications systems, such as a UMTS, to establish an RRC connection.

According to the UE provided in this embodiment of the present invention, when an RRC connection needs to be established, the UE may establish RRC according to an indication of a base station by using existing RRC configuration information, and does not need to acquire RRC configuration information from the base station again. Compared with the prior art, by using the UE provided in this embodiment of the present invention, in a process of establishing an RRC connection, it is unnecessary to acquire the RRC configuration information from the base station; therefore, transmission of RRC signaling can be reduced, fewer physical layer scheduling resource granularities are occupied, and utilization of physical layer resources is improved.

Based on the foregoing descriptions of the implementation manners, a person skilled in the art may clearly understand that the present invention may be implemented by software in addition to necessary universal hardware or by hardware only. In most circumstances, the former is a preferred implementation manner. Based on such an understanding, the technical solutions of the present invention essentially or the part contributing to the prior art may be implemented in a form of a software product. The computer software product is stored in a readable storage medium, such as a floppy disk, a hard disk or an optical disc of a computer, and includes several instructions for instructing a computer device (which may be a personal computer, a server, or a network device) to perform the methods described in the embodiments of the present invention.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for establishing a radio resource control RRC connection, comprising:
determining, by a base station, that user equipment UE needs to switch from an RRC connected mode to an RRC idle mode, and determining that a simplified RRC process is used when the UE establishes a next RRC connection, wherein the simplified RRC process refers to establishing an RRC connection by using acquired RRC configuration information of the UE; and
when the UE requests to establish a next RRC connection, establishing an RRC connection for the UE by using the simplified RRC process.

2. The method according to claim 1, wherein the determining, by a base station, that a simplified RRC process is used when the UE establishes a next RRC connection comprises:
determining that a bearer type of the UE remains unchanged in a set period of time, to determine that the simplified RRC process is used when the UE establishes a next RRC connection; or
determining that a time when the UE camps on a current cell is longer than a set period of time, to determine that the simplified RRC process is used when the UE establishes a next RRC connection; or
determining that a moving speed of the UE is less than or equal to a set value, to determine that the simplified RRC process is used when the UE establishes a next RRC connection; or
determining that load of a cell in which the UE is located is less than a set value, to determine that the simplified RRC process is used when the UE establishes a next RRC connection.

3. The method according to claim 1 or 2, wherein before the establishing an RRC connection for the UE by using the simplified RRC process, the method further comprises:
sending an RRC connection release message to the UE, wherein the RRC connection release message carries a first indication message, and the first indication message is used to instruct the UE to store RRC configuration information used for establishing a current RRC connection; and
the establishing an RRC connection for the UE by using the simplified RRC process comprises:
acquiring RRC configuration information of the UE; and
establishing, in response to a received RRC connection request message sent by the UE, an RRC connection for the UE according to the RRC configuration information of the UE, and sending a first RRC connection setup message to the UE, wherein the first RRC connection setup message is used to instruct the UE to establish an RRC connection by using the stored RRC configuration information.

4. The method according to claim 3, wherein the acquiring RRC configuration information of the UE comprises:
determining that the simplified RRC process is used when the UE establishes a next RRC connection, storing a context context of the UE, and acquiring the RRC configuration information of the UE from the context of the UE; or
determining that the simplified RRC process is used when the UE establishes a next RRC connection, and storing an RRC configuration parameter of the UE and an identifier of the UE that are used when the UE establishes a previous RRC connection, wherein the RRC configuration parameter of the UE and the identifier of the UE are the RRC configuration information of the UE.

5. The method according to claim 4, further comprising:
starting a first timer; and
when it is determined that the first timer times out, deleting the stored context context of the UE; or
when it is determined that the first timer times out, deleting the stored RRC configuration parameter of the UE and the stored identifier of the UE.

6. The method according to any one of claims 3 to 5, wherein the RRC connection request message sent by the UE comprises a second indication message, and the second indication message is used to indicate whether the RRC configuration information is stored in the UE; and
the establishing, in response to a received RRC connection request message sent by the UE, an RRC connection for the UE according to the RRC configuration information of the UE, and sending a first RRC connection setup message to the UE comprises:
receiving the RRC connection request message sent by the UE, acquiring the second indication message from the RRC connection request message, and determining, according to the second indication message, that the RRC configuration information is stored in the UE; and
establishing the RRC connection for the UE according to the RRC configuration information of the UE, and sending the first RRC connection setup message to the UE, to instruct the UE to establish an RRC connection according to the RRC configuration information stored by the UE.

7. The method according to any one of claims 3 to 5, further comprising:
adding a non-contention dedicated preamble preamble to the RRC connection release message; and
the establishing, in response to a received RRC connection request message sent by the UE, an RRC connection for the UE according to the RRC configuration information of the UE, and sending a first RRC connection setup message to the UE comprises:
determining that a preamble sent by the UE is the non-contention dedicated preamble, to determine that the RRC configuration information is stored in the UE, establishing the RRC connection for the UE according to the RRC configuration information of the UE, and sending the first RRC connection setup message to the UE.

8. The method according to claim 6 or 7, wherein the first RRC connection setup message carries an RRC connection reconfiguration message and an RRC security mode signaling message.

9. The method according to claim 1 or 2, further comprising:
storing an RRC configuration index table, wherein the RRC configuration index table comprises at least one RRC configuration scheme, determining an RRC configuration scheme of the UE from the stored RRC configuration index table according to the moving speed of the UE and/or a service requirement of the UE, and acquiring RRC configuration information of the UE according to the RRC configuration scheme of the UE.

10. The method according to claim 9, wherein the establishing an RRC connection for the UE by using the simplified RRC process comprises:
receiving an RRC connection request message sent by the UE, wherein the RRC connection request message sent by the UE comprises first index information, and the first index information is corresponding to an RRC configuration scheme in the RRC configuration index table; and
determining, in the RRC configuration index table, the RRC configuration scheme corresponding to the first index information, acquiring the RRC configuration information of the UE according to the RRC configuration scheme corresponding to the first index information, establishing the RRC connection for the UE according to the RRC configuration information of the UE, and sending a first RRC connection setup message to the UE.

11. The method according to claim 10, wherein the method further comprises:
the RRC configuration index table is stored in the UE; and
the first RRC connection setup message comprises second index information, the second index information is corresponding to an RRC configuration scheme in the RRC configuration index table stored by the UE, and the second index information is used to instruct the UE to determine, in the RRC configuration index table, the RRC configuration scheme corresponding to the second index information, acquire the RRC configuration information of the UE according to the RRC configuration scheme, and establish an RRC connection by using the RRC configuration information.

12. The method according to claim 1 or 2, wherein the method further comprises:
receiving an RRC connection request message sent by the UE, wherein the RRC connection request message carries a non-access stratum NAS message, and the NAS message is used to request RRC configuration information of the UE from the core network device; and
sending the NAS message to the core network device, so that the core network device determines the RRC configuration information of the UE according to the NAS message, and returns the RRC configuration information of the UE to the base station, wherein
the establishing an RRC connection for the UE by using the simplified RRC process comprises:
sending a first RRC connection setup message to the UE, and establishing an RRC connection to the UE according to the RRC configuration information of the UE, wherein the first RRC connection setup message carries an RRC connection reconfiguration message and an RRC security mode signaling message.

13. A method for establishing a radio resource control RRC connection, comprising:
receiving, by user equipment UE, a first RRC connection setup message sent by a base station, wherein the first RRC connection setup message is used to instruct the UE to establish an RRC connection by using a simplified RRC process, wherein the simplified RRC process refers to establishing an RRC connection by using acquired RRC configuration information of the UE; and
establishing an RRC connection by using the simplified RRC process.

14. The method according to claim 13, wherein before the establishing an RRC connection by using the simplified RRC process, the method further comprises:
acquiring RRC configuration information of the UE.

15. The method according to claim 14, wherein before the receiving, by user equipment UE, a first RRC connection setup message sent by a base station, the method further comprises:
establishing, by the UE, an RRC connection to the base station;
determining, by the UE, that the UE needs to switch from an RRC connected mode to an RRC idle mode, and sending an RRC connection release request message to the base station; and
receiving an RRC connection release message that is sent by the base station according to the RRC connection release request message, and switching to the RRC idle mode according to the RRC connection release message, wherein the RRC connection release message carries a first indication message, and the first indication message is used to instruct the UE to store RRC configuration information used for establishing a current RRC connection.

16. The method according to claim 15, wherein the acquiring RRC configuration information of the UE comprises:
in response to the first indication message in the RRC connection release message, storing the RRC configuration information used for establishing the current RRC connection, wherein the RRC configuration information used for establishing the current RRC connection is the RRC configuration information of the UE.

17. The method according to claim 15 or 16, wherein after the receiving an RRC connection release message that is sent by the base station according to the RRC connection release request message, and switching to the RRC idle mode according to the RRC connection release message, the method further comprises:
determining, by the UE, that the UE needs to switch from the RRC idle mode to the RRC connected mode, and sending an RRC connection request message to the base station, wherein the RRC connection request message comprises a second indication message, and the second indication message is used to indicate that the RRC configuration information is stored in the UE.

18. The method according to claim 15 or 16, wherein the RRC connection release message carries a non-contention dedicated preamble preamble; and
before the determining, by the UE, that the UE needs to switch from the RRC idle mode to the RRC connected mode, and sending an RRC connection request message to the base station, the method further comprises:
sending the non-contention dedicated preamble to the base station, so as to access the base station, wherein the non-contention dedicated preamble is used to indicate that the RRC configuration information is stored in the UE.

19. The method according to claim 17 or 18, wherein the first RRC connection setup message is used to instruct the UE to establish an RRC connection according to the stored RRC configuration information; and
the establishing an RRC connection by using the simplified RRC process comprises:
in response to the first RRC connection setup message, establishing an RRC connection according to the stored RRC configuration information.

20. The method according to any one of claims 15 to 19, wherein the first RRC connection setup message carries an RRC connection reconfiguration message and an RRC security mode signaling message.

21. The method according to claim 14, wherein the acquiring RRC configuration information of the UE further comprises:
storing, by the UE, an RRC configuration index table, wherein the RRC configuration index table comprises at least one RRC configuration scheme, determining an RRC configuration scheme of the UE from the stored RRC configuration index table according to a moving speed of the UE and/or a service requirement of the UE, and acquiring the RRC configuration information of the UE according to the RRC configuration scheme of the UE.

22. The method according to claim 21, wherein before the receiving, by UE, a first RRC connection setup message sent by a base station, the method further comprises:
detecting a current moving speed of the UE and/or a current service requirement of the UE, and determining first index information, wherein the first index information is corresponding to an RRC configuration scheme in the RRC configuration index table; and
sending an RRC connection request message to the base station, wherein the RRC connection request message comprises the first index information, the first index information is used to instruct the base station to determine the RRC configuration information of the UE, and the RRC configuration index table is stored in the base station.

23. The method according to claim 21 or 22, wherein the first RRC connection setup message comprises second index information, the second index information is corresponding to an RRC configuration scheme in the RRC configuration index table, and the second index information is used to instruct the UE to determine an RRC configuration scheme in the RRC configuration index table and establish an RRC connection by using the determined RRC configuration scheme.

24. The method according to claim 23, wherein the acquiring RRC configuration information of the UE comprises:
determining, in the configuration index table, the RRC configuration scheme corresponding to the second index information, and acquiring the RRC configuration information of the UE according to the RRC configuration scheme.

25. The method according to claim 24, wherein the establishing an RRC connection by using the simplified RRC process comprises:
establishing an RRC connection by using the acquired RRC configuration information of the UE.

26. The method according to claim 14, wherein before the receiving, by user equipment UE, a first RRC connection setup message sent by a base station, the method further comprises:
sending an RRC connection request message to the base station, wherein the RRC connection request information carries a non-access stratum NAS message, and the NAS message needs to be reported by the base station to a core network device, so that the core network device determines the RRC configuration information of the UE, and returns the RRC configuration information of the UE to the base station.

27. The method according to claim 26, wherein the acquiring RRC configuration information of the UE comprises:
receiving the RRC configuration information of the UE that is determined by the core network device and forwarded by the base station; and
the establishing an RRC connection by using the simplified RRC process comprises:
establishing an RRC connection according to the RRC configuration information of the UE;
wherein the first RRC connection setup message carries an RRC connection reconfiguration message and an RRC security mode signaling message.

28. An apparatus for establishing a radio resource control RRC connection, comprising:
a determining module, configured to determine that user equipment UE needs to switch from an RRC connected mode to an RRC idle mode, and determine that a simplified RRC process is used when the UE establishes a next RRC connection, wherein the simplified RRC process refers to establishing an RRC connection by using acquired RRC configuration information of the UE; and
a processing module, configured to: when the UE requests to establish a next RRC connection, establish an RRC connection for the UE by using the simplified RRC process.

29. The apparatus according to claim 28, wherein the determining module is specifically configured to determine that a bearer type of the UE remains unchanged in a set period of time, to determine that the simplified RRC process is used when the UE establishes a next RRC connection; or
the determining module is specifically configured to determine that a time when the UE camps on a current cell is longer than a set period of time, to determine that the simplified RRC process is used when the UE establishes a next RRC connection; or
the determining module is specifically configured to determine that a moving speed of the UE is less than or equal to a set value, to determine that the simplified RRC process is used when the UE establishes a next RRC connection; or
the determining module is specifically configured to determine that load of a cell in which the UE is located is less than a set value, to determine that the simplified RRC process is used when the UE establishes a next RRC connection.

30. The apparatus according to claim 28 or 29, wherein the apparatus further comprises:
a sending module, configured to send an RRC connection release message to the UE, wherein the RRC connection release message carries a first indication message, and the first indication message is used to instruct the UE to store RRC configuration information used for establishing a current RRC connection, wherein
the processing module is specifically configured to: acquire RRC configuration information of the UE, establish, in response to a received RRC connection request message sent by the UE, an RRC connection for the UE according to the RRC configuration information of the UE, and send a first RRC connection setup message to the UE, wherein the first RRC connection setup message is used to instruct the UE to establish an RRC connection by using the stored RRC configuration information.

31. The apparatus according to claim 30, wherein the processing module is configured to store a context context of the UE, and acquire the RRC configuration information of the UE from the context of the UE;
or
the processing module is configured to store an RRC configuration parameter of the UE and an identifier of the UE that are used when the UE establishes a previous RRC connection, wherein the RRC configuration parameter of the UE and the identifier of the UE are the RRC configuration information of the UE.

32. The apparatus according to claim 31, further comprising:
a first timer, configured to start timing when it is determined that the UE switches to the RRC idle mode, wherein
the processing module is configured to: when it is determined that the first timer times out, delete the stored context context of the UE; or
the processing module is further configured to: when it is determined that the first timer times out, delete the stored RRC configuration parameter of the UE and the stored identifier of the UE.

33. The apparatus according to any one of claims 30 to 32, wherein the processing module is configured to receive the RRC connection request message sent by the UE, wherein the RRC connection request message comprises a second indication message, the second indication message is used to indicate whether the RRC configuration information is stored in the UE; acquire the second indication message from the RRC connection request message, and determine, according to the second indication message, that the RRC configuration information is stored in the UE; and establish an RRC connection for the UE according to the RRC configuration information of the UE, and send the first RRC connection setup message to the UE, to instruct the UE to establish an RRC connection according to the RRC configuration information stored by the UE.

34. The apparatus according to any one of claims 30 to 32, wherein the sending module is further configured to add a non-contention dedicated preamble preamble to the RRC connection release message; and
the processing module is configured to determine that a preamble sent by the UE is the non-contention dedicated preamble, to determine that the RRC configuration information is stored in the UE, establish an RRC connection for the UE according to the RRC configuration information of the UE, and send the first RRC connection setup message to the UE.

35. The apparatus according to claim 33 or 34, wherein the first RRC connection setup message sent by the processing module carries an RRC connection reconfiguration message and an RRC security mode signaling message.

36. The apparatus according to claim 28 or 29, further comprising:
a storage module, configured to store an RRC configuration index table, wherein the RRC configuration index table comprises at least one RRC configuration scheme, determine an RRC configuration scheme of the UE from the stored RRC configuration index table according to the moving speed of the UE and/or a service requirement of the UE, and acquire RRC configuration information of the UE according to the RRC configuration scheme of the UE.

37. The apparatus according to claim 36, wherein the processing module is specifically configured to receive an RRC connection request message sent by the UE, wherein the RRC connection request message sent by the UE comprises first index information, and the first index information is corresponding to an RRC configuration scheme in the RRC configuration index table; and determine, in the RRC configuration index table stored by the storage module, the RRC configuration scheme corresponding to the first index information, acquire the RRC configuration information of the UE according to the RRC configuration scheme corresponding to the first index information, establish an RRC connection for the UE according to the RRC configuration information of the UE, and send a first RRC connection setup message to the UE.

38. The apparatus according to claim 37, wherein the first RRC connection setup message sent by the processing module comprises second index information, the second index information is corresponding to an RRC configuration scheme in the RRC configuration index table stored by the UE, and the second index information is used to instruct the UE to determine, in the RRC configuration index table, the RRC configuration scheme corresponding to the second index information; and
the processing module is configured to acquire the RRC configuration information of the UE according to the RRC configuration scheme, and establish an RRC connection by using the RRC configuration information.

39. The apparatus according to claim 28 or 29, wherein
the processing module is further configured to receive an RRC connection request message sent by the UE, wherein the RRC connection request message carries a non-access stratum NAS message, and the NAS message is used to request RRC configuration information of the UE from the core network device;
the processing module is further configured to send the NAS message to the core network device, so that the core network device determines the RRC configuration information of the UE according to the NAS message, and returns the RRC configuration information of the UE to the processing module; and
the processing module is further configured to send a first RRC connection setup message to the UE, and establish an RRC connection to the UE according to the RRC configuration information of the UE, wherein the first RRC connection setup message carries an RRC connection reconfiguration message and an RRC security mode signaling message.

40. An apparatus for establishing a radio resource control RRC connection, comprising:
a receiving module, configured to receive a first RRC connection setup message sent by a base station, wherein the first RRC connection setup message is used to instruct the UE to establish an RRC connection by using a simplified RRC process, wherein the simplified RRC process refers to establishing an RRC connection by using acquired RRC configuration information of the UE; and
a processing module, configured to establish an RRC connection by using the simplified RRC process.

41. The apparatus according to claim 40, further comprising:
an acquiring module, configured to acquire the RRC configuration information of the UE.

42. The apparatus according to claim 41, further comprising:
a first sending module, configured to determine that switching from an RRC connected mode to an RRC idle mode is needed, and send an RRC connection release request message to the base station, wherein
the receiving module is further configured to receive an RRC connection release message that is sent by the base station according to the RRC connection release request message, wherein the RRC connection release message is used to instruct the UE to switch to the RRC idle mode, the RRC connection release message carries a first indication message, and the first indication message is used to instruct the UE to store RRC configuration information used for establishing a current RRC connection.

43. The apparatus according to claim 42, wherein the acquiring module is specifically configured to: in response to the first indication message in the RRC connection release message received by the receiving module, store the RRC configuration information used for establishing the current RRC connection, wherein the RRC configuration information used for establishing the current RRC connection is the RRC configuration information of the UE.

44. The apparatus according to claim 42 or 43, wherein
the first sending module is configured to determine that switching from the RRC idle mode to the RRC connected mode is needed, and send an RRC connection request message to the base station, wherein the RRC connection request message comprises a second indication message, and the second indication message is used to indicate that the RRC configuration information is stored in the UE.

45. The apparatus according to claim 42 or 43, wherein the RRC connection release message received by the receiving module carries a non-contention dedicated preamble preamble; and
the first sending module is configured to send the non-contention dedicated preamble to the base station, so as to access the base station, wherein the non-contention dedicated preamble is used to indicate that the RRC configuration information is stored in the UE.

46. The apparatus according to claim 44 or 45, wherein the first RRC connection setup message received by the receiving module is used to instruct the UE to establish an RRC connection according to the RRC configuration information stored by the acquiring module; and
the processing module is configured to establish, in response to the first RRC connection setup message received by the receiving module, an RRC connection according to the RRC configuration information stored by the acquiring module.

47. The apparatus according to any one of claims 42 to 46, wherein the first RRC connection setup message received by the receiving module carries an RRC connection reconfiguration message and an RRC security mode signaling message.

48. The apparatus according to claim 41, further comprising:
a storage module, configured to store an RRC configuration index table, wherein the RRC configuration index table comprises at least one RRC configuration scheme, determine an RRC configuration scheme of the UE from the stored RRC configuration index table according to a moving speed of the UE and/or a service requirement of the UE, and acquire RRC configuration information of the UE according to the RRC configuration scheme of the UE.

49. The apparatus according to claim 48, further comprising:
a detection module, configured to detect a current moving speed of the UE and/or a current service requirement of the UE, and determine first index information, wherein the first index information is corresponding to an RRC configuration scheme in the RRC configuration index table; and
a second sending module, configured to send an RRC connection request message to the base station, wherein the RRC connection request message comprises the first index information determined by the detection module, the first index information is used to instruct the base station to determine the RRC configuration information of the UE, and the RRC configuration index table is stored in the base station.

50. The apparatus according to claim 48 or 49, wherein the first RRC connection setup message received by the receiving module comprises second index information, the second index information is corresponding to an RRC configuration scheme in the RRC configuration index table, and the second index information is used to instruct the processing module to determine an RRC configuration scheme in the RRC configuration index table stored by the storage module and establish an RRC connection by using the determined RRC configuration scheme.

51. The apparatus according to claim 50, wherein the acquiring module is configured to determine, in the configuration index table stored by the storage module, the RRC configuration scheme corresponding to the second index information, and acquire the RRC configuration information of the UE according to the RRC configuration scheme.

52. The apparatus according to claim 51, wherein the processing module is configured to establish an RRC connection by using the RRC configuration information of the UE acquired by the acquiring module.

53. The apparatus according to claim 41, further comprising:
a third sending module, configured to send an RRC connection request message to the base station, wherein the RRC connection request information carries a non-access stratum NAS message, and the NAS message needs to be reported by the base station to a core network device, so that the core network device determines the RRC configuration information of the UE, and returns the RRC configuration information of the UE to the base station.

54. The apparatus according to claim 53, wherein
the acquiring module is configured to receive the RRC configuration information of the UE that is determined by the core network device and forwarded by the base station; and
the processing module is configured to establish an RRC connection according to the RRC configuration information of the UE acquired by the acquiring module;
wherein the first RRC connection setup message received by the receiving module carries an RRC connection reconfiguration message and an RRC security mode signaling message.

55. An apparatus for establishing a radio resource control RRC connection, comprising:
a processor, configured to determine that user equipment UE needs to switch from an RRC connected mode to an RRC idle mode, and determine that a simplified RRC process is used when the UE establishes a next RRC connection, wherein the simplified RRC process refers to establishing an RRC connection by using acquired RRC configuration information of the UE, wherein
the processor is further configured to: when the UE requests to establish a next RRC connection, establish an RRC connection for the UE by using the simplified RRC process.

56. The base station according to claim 55, wherein the processor is specifically configured to determine that a bearer type of the UE remains unchanged in a set period of time, to determine that the simplified RRC process is used when the UE establishes a next RRC connection; or
the processor is specifically configured to determine that a time when the UE camps on a current cell is longer than a set period of time, to determine that the simplified RRC process is used when the UE establishes a next RRC connection; or
the processor is specifically configured to determine that a moving speed of the UE is less than or equal to a set value, to determine that the simplified RRC process is used when the UE establishes a next RRC connection; or
the processor is specifically configured to determine that load of a cell in which the UE is located is less than a set value, to determine that the simplified RRC process is used when the UE establishes a next RRC connection.

57. The base station according to claim 55 or 56, wherein the base station further comprises:
a first transmitter, configured to send an RRC connection release message to the UE, wherein the RRC connection release message carries a first indication message, and the first indication message is used to instruct the UE to store RRC configuration information used for establishing a current RRC connection; and
the processor is specifically configured to acquire RRC configuration information of the UE, establish, in response to a received RRC connection request message sent by the UE, an RRC connection for the UE according to the RRC configuration information of the UE, and instruct the first transmitter to send a first RRC connection setup message to the UE, wherein the first RRC connection setup message is used to instruct the UE to establish an RRC connection by using the stored RRC configuration information.

58. The base station according to claim 57, further comprising:
a first memory, configured to store a context context of the UE, and from the context of the UE;
or
the first memory, configured to store an RRC configuration parameter of the UE and an identifier of the UE that are used when the UE establishes a previous RRC connection, wherein the RRC configuration parameter of the UE and the identifier of the UE are the RRC configuration information of the UE, wherein
the processor is configured to acquire the RRC configuration information of the UE from the context of the UE stored by the first memory, or acquire the RRC configuration information of the UE according to the RRC configuration parameter of the UE and the identifier of the UE that are stored by the first memory.

59. The base station according to claim 58, further comprising:
a first timer, configured to start timing when it is determined that the UE switches to the RRC idle mode, wherein
the first memory is configured to: when it is determined that the first timer times out, delete the stored context context of the UE; or
the first memory is further configured to: when it is determined that the first timer times out, delete the stored RRC configuration parameter of the UE and the stored identifier of the UE.

60. The base station according to any one of claims 57 to 59, further comprising:
a first receiver, configured to receive the RRC connection request message sent by the UE, wherein the RRC connection request message comprises a second indication message, and the second indication message is used to indicate whether the RRC configuration information is stored in the UE, wherein
the processor is configured to acquire the second indication message from the RRC connection request message received by the first receiver, determine, according to the second indication message, that the RRC configuration information is stored in the UE, establish an RRC connection for the UE according to the RRC configuration information of the UE, and instruct the first transmitter to send the first RRC connection setup message to the UE, to instruct the UE to establish an RRC connection according to the RRC configuration information stored by the UE.

61. The base station according to any one of claims 57 to 59, wherein the first transmitter is further configured to add a non-contention dedicated preamble preamble to the RRC connection release message; and
the processor is configured to determine that a preamble sent by the UE is the non-contention dedicated preamble, to determine that the RRC configuration information is stored in the UE, establish an RRC connection for the UE according to the RRC configuration information of the UE, and instruct the first transmitter to send the first RRC connection setup message to the UE.

62. The base station according to claim 60 or 61, wherein the first RRC connection setup message sent by the first transmitter carries an RRC connection reconfiguration message and an RRC security mode signaling message.

63. The base station according to claim 55 or 56, further comprising:
a second memory, configured to store an RRC configuration index table, wherein the RRC configuration index table comprises at least one RRC configuration scheme, determine an RRC configuration scheme of the UE from the stored RRC configuration index table according to the moving speed of the UE and/or a service requirement of the UE, and acquire RRC configuration information of the UE according to the RRC configuration scheme of the UE.

64. The base station according to claim 63, further comprising:
a second receiver, configured to receive an RRC connection request message sent by the UE, wherein the RRC connection request message sent by the UE comprises first index information, and the first index information is corresponding to an RRC configuration scheme in the RRC configuration index table; and
a second transmitter, configured to send a first RRC connection setup message to the UE, wherein
the processor is configured to determine, in the RRC configuration index table stored by the second memory, the RRC configuration scheme corresponding to the first index information, acquire the RRC configuration information of the UE according to the RRC configuration scheme corresponding to the first index information, establish an RRC connection for the UE according to the RRC configuration information of the UE, and instruct the second transmitter to send the first RRC connection setup message to the UE.

65. The base station according to claim 64, wherein the first RRC connection setup message sent by the second transmitter comprises second index information, the second index information is corresponding to an RRC configuration scheme in the RRC configuration index table stored by the UE, and the second index information is used to instruct the UE to determine, in the RRC configuration index table, the RRC configuration scheme corresponding to the second index information; and
the processor is configured to acquire the RRC configuration information of the UE according to the RRC configuration scheme, and establish an RRC connection by using the RRC configuration information.

66. The base station according to claim 55 or 56, further comprising:
a third receiver, configured to receive an RRC connection request message sent by the UE, wherein the RRC connection request message carries a non-access stratum NAS message, and the NAS message is used to request RRC configuration information of the UE from the core network device; and
a third transmitter, configured to send the NAS message received by the third receiver to the core network device, so that the core network device determines the RRC configuration information of the UE according to the NAS message, and returns the RRC configuration information of the UE to the base station, wherein
the third transmitter is further configured to send a first RRC connection setup message to the UE, and establish an RRC connection to the UE according to the RRC configuration information of the UE, wherein the first RRC connection setup message carries an RRC connection reconfiguration message and an RRC security mode signaling message.

67. An apparatus for establishing a radio resource control RRC connection, comprising:
a receiver, configured to receive a first RRC connection setup message sent by a base station, wherein the first RRC connection setup message is used to instruct the UE to establish an RRC connection by using a simplified RRC process, wherein the simplified RRC process refers to establishing an RRC connection by using acquired RRC configuration information of the UE; and
a processor, configured to establish an RRC connection by using the simplified RRC process.

68. The UE according to claim 67, wherein the processor is further configured to acquire RRC configuration information of the UE.

69. The UE according to claim 68, further comprising:
a first transmitter, configured to determine that switching from an RRC connected mode to an RRC idle mode is needed, and send an RRC connection release request message to the base station, wherein
the receiver is further configured to receive an RRC connection release message that is sent by the base station according to the RRC connection release request message, wherein the RRC connection release message is used to instruct the UE to switch to the RRC idle mode, the RRC connection release message carries a first indication message, and the first indication message is used to instruct the UE to store RRC configuration information used for establishing a current RRC connection.

70. The UE according to claim 69, further comprising:
a first memory, configured to: in response to the first indication message in the RRC connection release message received by the receiver, store the RRC configuration information used for establishing the current RRC connection, wherein
the processor is configured to determine that the RRC configuration information that is used for establishing the current RRC connection and stored by the first memory is the RRC configuration information of the UE.

71. The UE according to claim 69 or 70, wherein the first transmitter is further configured to determine that switching from the RRC idle mode to the RRC connected mode is needed, and send an RRC connection request message to the base station, wherein the RRC connection request message comprises a second indication message, and the second indication message is used to indicate that the RRC configuration information is stored in the UE.

72. The UE according to claim 69 or 70, wherein the RRC connection release message received by the receiver carries a non-contention dedicated preamble preamble; and
the first transmitter is configured to send the non-contention dedicated preamble to the base station, so as to access the base station, wherein the non-contention dedicated preamble is used to indicate that the RRC configuration information is stored in the UE.

73. The UE according to claim 71 or 72, wherein the first RRC connection setup message received by the receiver is used to instruct the UE to establish an RRC connection according to the RRC configuration information stored by the first memory; and
the processor is configured to establish, in response to the first RRC connection setup message received by the receiver, an RRC connection according to the RRC configuration information stored by the first memory.

74. The UE according to any one of claims 69 to 73, wherein the first RRC connection setup message received by the receiver carries an RRC connection reconfiguration message and an RRC security mode signaling message.

75. The UE according to claim 68, further comprising:
a second memory, configured to store an RRC configuration index table, wherein the RRC configuration index table comprises at least one RRC configuration scheme, determine an RRC configuration scheme of the UE from the stored RRC configuration index table according to a moving speed of the UE and/or a service requirement of the UE, and acquire RRC configuration information of the UE according to the RRC configuration scheme of the UE.

76. The UE according to claim 75, wherein the processor is configured to detect a current moving speed of the UE and/or a current service requirement of the UE, and determine first index information, wherein the first index information is corresponding to an RRC configuration scheme in the RRC configuration index table; and
the UE further comprises a second transmitter, configured to send an RRC connection request message to the base station, wherein the RRC connection request message comprises the first index information determined by the processor, the first index information is used to instruct the base station to determine the RRC configuration information of the UE, and the RRC configuration index table is stored in the base station.

77. The UE according to claim 75 or 76, wherein the first RRC connection setup message received by the receiver comprises second index information, the second index information is corresponding to an RRC configuration scheme in the RRC configuration index table, and the second index information is used to instruct the processor to determine an RRC configuration scheme in the RRC configuration index table stored by the second memory and establish an RRC connection by using the determined RRC configuration scheme.

78. The UE according to claim 77, wherein the processor is further configured to determine, in the configuration index table stored by the second memory, the RRC configuration scheme corresponding to the second index information, and acquire the RRC configuration information of the UE according to the RRC configuration scheme.

79. The UE according to claim 78, wherein the processor is configured to establish an RRC connection by using the acquired RRC configuration information of the UE.

80. The UE according to claim 68, further comprising:
a third transmitter, configured to send an RRC connection request message to the base station, wherein the RRC connection request information carries a non-access stratum NAS message, and the NAS message needs to be reported by the base station to a core network device, so that the core network device determines the RRC configuration information of the UE, and returns the RRC configuration information of the UE to the base station.

81. The UE according to claim 80, wherein the receiver is configured to receive the RRC configuration information of the UE that is determined by the core network device and forwarded by the base station; and
the processor is configured to establish an RRC connection according to the RRC configuration information of the UE received by the receiver;
wherein the first RRC connection setup message received by the receiver carries an RRC connection reconfiguration message and an RRC security mode signaling message.
